(19) Europäisches Patentamt
European Patent Office
Office européen des brevets

(11) **EP 4 746 491 A1**

(12) **EUROPEAN PATENT APPLICATION**
published in accordance with Art. 153(4) EPC

(43) Date of publication:
**20.05.2026 Bulletin 2026/21**

(21) Application number: **24851067.9**

(22) Date of filing: **07.08.2024**

(51) International Patent Classification (IPC):
*H04W 24/02* (2009.01)

(52) Cooperative Patent Classification (CPC):
**H04W 24/02; H04W 36/00**

(86) International application number:
**PCT/CN2024/110486**

(87) International publication number:
**WO 2025/031422 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 CN 202311011272**

(71) Applicant: **Huawei Technologies Co., Ltd.
Shenzhen, Guangdong 518129 (CN)**

(72) Inventors:
• **GU, Zhifang**
  **Shenzhen, Guangdong 518129 (CN)**
• **SHI, Yulong**
  **Shenzhen, Guangdong 518129 (CN)**
• **FAN, Qiang**
  **Shenzhen, Guangdong 518129 (CN)**
• **YOU, Chunhua**
  **Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS, AND COMPUTER-READABLE STORAGE MEDIUM**

(57) This application provides a communication method and apparatus, and a computer-readable storage medium. The method includes: receiving first indication information, where the first indication information indicates a terminal device to send a preamble to a first candidate cell, and the first indication information includes first information; and determining, based on the first information and second information, whether to reset a power ramping counter, where the second information is included in second indication information, and the second indication information is indication information that indicates the terminal device to send a preamble to a second candidate cell and that is sent before the first indication information. According to the technical solutions provided in this application, interference during a cell handover can be reduced, and an overall network capacity can be improved.

FIG. 6

## Description

This application claims priority to Chinese Patent Application No. 202311011272.7, filed with the China National Intellectual Property Administration on August 10, 2023 and entitled "COMMUNICATION METHOD AND APPARATUS, AND COMPUTER-READABLE STORAGE MEDIUM", which is incorporated herein by reference in its entirety.

## TECHNICAL FIELD

This application relates to the field of wireless communication technologies, and in particular, to a communication method and apparatus, and a computer-readable storage medium.

## BACKGROUND

In a wireless communication system, a communication link between a terminal and an access network device changes due to movement of the terminal device, and the access network device indicates, based on a movement status of the terminal device, the terminal device to perform a cell handover. Usually, a cell handover latency may be effectively reduced through a random-access-less handover. Specifically, before receiving a handover command, the terminal device receives indication information from the access network device to send a preamble (preamble) to a target cell, so that an access network device to which the target cell belongs can calculate timing advance (timing advance, TA) based on the preamble.

After the terminal device sends the preamble, the access network device may fail to receive the preamble or fail to calculate a TA value due to a low transmit power. In this case, the access network device needs to indicate the terminal device to perform a preamble retransmission and increase the transmit power of the terminal device. However, if the terminal device loses some indication information, the preamble may be sent using an excessively high power, causing interference during the cell handover. Therefore, how to reduce interference during a cell handover is a technical problem to be urgently resolved.

## SUMMARY

Embodiments of this application provide a communication method and apparatus, and a computer-readable storage medium, to reduce interference during a cell handover and improve an overall network capacity.

According to a first aspect, this application provides a communication method. The method may be applied to a terminal device, or may be applied to an apparatus (for example, a chip, a chip system, or a circuit) in a terminal device or an apparatus that can be used in collaboration with a terminal device. The following provides descriptions by using an example in which the method is applied to a terminal device. The method may include: receiving first indication information, where the first indication information indicates a terminal device to send a preamble to a first candidate cell, and the first indication information includes first information; and determining, based on the first information and second information, whether to reset a power ramping counter, where the second information is included in second indication information, and the second indication information is indication information that indicates the terminal device to send a preamble to a second candidate cell and that is sent before the first indication information.

In the solution provided in this application, the terminal device may determine, based on comparison between the first information and the second information in the two pieces of indication information, whether to reset the power ramping counter, thereby aligning understanding between the terminal device and an access network device on whether power ramping is needed, avoiding excessive power ramping by the terminal device, reducing interference during a cell handover, and improving an overall network capacity.

In a possible implementation, determining, based on the first information and the second information, whether to reset the power ramping counter includes: if the first information is different from the second information, determining that current sending of the preamble to the candidate cell is an initial transmission, and resetting the power ramping counter; or if the first information is the same as the second information, determining that current sending of the preamble to the candidate cell is a retransmission, and not resetting the power ramping counter.

In a possible implementation, the first information and the second information include value information or an identity of a candidate cell.

In the solution provided in this application, the terminal device may determine, based on the value information or the identity of the candidate cell, whether sending of the preamble to the candidate cell that the indication information indicates the terminal device to perform is an initial transmission or a retransmission, and whether the power ramping counter needs to be reset, thereby aligning, between the terminal device and the access network device, a power level for preamble sending, and avoiding interference caused by using an excessively high power.

In a possible implementation, the first information and the second information include an identity of a candidate cell and value information. Determining, based on the first information and the second information, whether to reset the power ramping counter includes: if the identity of the candidate cell in the first information is the same as the identity of the candidate cell in the second information, and the value information in the first information is different from the value information in the second information, determining that current sending of the preamble to the candidate cell is an initial transmission, and resetting the power ramping counter; or if the identity of the candidate cell in the first information is the same as the identity of the candidate cell in the second information, and the value information in the first information is the same as the value information in the second information, determining that current sending of the preamble to the candidate cell is a retransmission, and not resetting the power ramping counter.

In the solution provided in this application, the terminal device may determine, based on the identity of the candidate cell and the value information, whether sending of the preamble to the candidate cell that the indication information indicates the terminal device to perform is an initial transmission or a retransmission, and whether the power ramping counter needs to be reset, thereby aligning, between the terminal device and the access network device, a power level for preamble sending, and avoiding interference caused by using an excessively high power. In this implementation, whether the power ramping counter needs to be reset is determined by using two pieces of information, thereby improving determining accuracy.

In a possible implementation, the first information further includes an identity of a candidate cell and carrier information of the candidate cell. Determining, based on the first information and the second information, whether to reset the power ramping counter includes: if the identity of the candidate cell in the first information is the same as an identity of a candidate cell in the second information, and the carrier information of the candidate cell in the first information is different from carrier information of the candidate cell in the second information, determining that current sending of the preamble to the candidate cell is an initial transmission, and resetting the power ramping counter; or if the identity of the candidate cell in the first information is the same as an identity of a candidate cell in the second information, and the carrier information of the candidate cell in the first information is the same as carrier information of the candidate cell in the second information, determining that current sending of the preamble to the candidate cell is a retransmission, and not resetting the power ramping counter.

In the solution provided in this application, the terminal device may determine, based on the identity of the candidate cell and the carrier information of the candidate cell, whether sending of the preamble to the candidate cell that the indication information indicates the terminal device to perform is an initial transmission or a retransmission, and whether the power ramping counter needs to be reset, thereby aligning, between the terminal device and the access network device, a power level for preamble sending, and avoiding interference caused by using an excessively high power. In this implementation, whether the power ramping counter needs to be reset is determined by using two pieces of information, thereby improving determining accuracy.

In a possible implementation, the first information further includes value information, an identity of a candidate cell, and carrier information of the candidate cell. Determining, based on the first information and the second information, whether to reset the power ramping counter includes: if the identity of the candidate cell in the first information is the same as an identity of a candidate cell in the second information, the carrier information of the candidate cell in the first information is the same as carrier information of the candidate cell in the second information, and the value information in the first information is different from value information in the second information, determining that current sending of the preamble to the candidate cell is an initial transmission, and resetting the power ramping counter; or if the identity of the candidate cell in the first information is the same as an identity of a candidate cell in the second information, the carrier information of the candidate cell in the first information is the same as carrier information of the candidate cell in the second information, the carrier information of the candidate cell in the first information is the same as carrier information of the candidate cell in the second information, and the value information in the first information is the same as value information in the second information, determining that current sending of the preamble to the candidate cell is a retransmission, and not resetting the power ramping counter.

In the solution provided in this application, the terminal device may determine, based on the value information, the identity of the candidate cell, and the carrier information of the candidate cell, whether sending of the preamble to the candidate cell that the indication information indicates the terminal device to perform is an initial transmission or a retransmission, and whether the power ramping counter needs to be reset, thereby aligning, between the terminal device and the access network device, a power level for preamble sending, and avoiding interference caused by using an excessively high power. In this implementation, whether the power ramping counter needs to be reset is determined by using three pieces of information, thereby improving determining accuracy.

In a possible implementation, not resetting the power ramping counter is incrementing or maintaining the power ramping counter.

According to a second aspect, this application provides a communication method. The method may be applied to a terminal device, or may be applied to an apparatus (for example, a chip, a chip system, or a circuit) in a terminal device or an apparatus that can be used in collaboration with a terminal device. The following provides descriptions by using an example in which the method is applied to a terminal device. The method may include: receiving first indication information, and starting or restarting a timer, where the first indication information indicates a terminal device to send a preamble to a first candidate cell; and determining, based on the timer, whether to reset a power ramping counter.

In the solution provided in this application, the terminal device may determine, depending on whether the timer expires, whether to reset the power ramping counter, thereby aligning understanding between the terminal device and an access network device on whether power ramping is needed, avoiding excessive power ramping by the terminal device, reducing interference during a cell handover, and improving an overall network capacity.

In a possible implementation, determining, based on the timer, whether to reset the power ramping counter includes: if the timer expires, determining to reset the power ramping counter.

In a possible implementation, the first indication information includes first information. Determining, based on the timer, whether to reset the power ramping counter includes: receiving third indication information during running of the timer, where the third indication information includes second information, and the second indication information indicates the terminal device to send a preamble to a second candidate cell; and determining, based on the first information and the second information, whether to reset the power ramping counter.

In a possible implementation, determining, based on the first information and the second information, whether to reset the power ramping counter includes: if the first information is different from the second information, determining that current sending of the preamble to the candidate cell is an initial transmission, and resetting the power ramping counter; or if the first information is the same as the second information, determining that current sending of the preamble to the candidate cell is a retransmission, and not resetting the power ramping counter.

In a possible implementation, the first information and the second information include value information or an identity of a candidate cell.

In a possible implementation, the first information and the second information include an identity of a candidate cell and value information. Determining, based on the first information and the second information, whether to reset the power ramping counter includes: if the identity of the candidate cell in the first information is the same as the identity of the candidate cell in the second information, and the value information in the first information is different from the value information in the second information, determining that current sending of the preamble to the candidate cell is an initial transmission, and resetting the power ramping counter; or if the identity of the candidate cell in the first information is the same as the identity of the candidate cell in the second information, and the value information in the first information is the same as the value information in the second information, determining that current sending of the preamble to the candidate cell is a retransmission, and not resetting the power ramping counter.

In a possible implementation, the first information further includes an identity of a candidate cell and carrier information of the candidate cell. Determining, based on the first information and the second information, whether to reset the power ramping counter includes: if the identity of the candidate cell in the first information is the same as an identity of a candidate cell in the second information, and the carrier information of the candidate cell in the first information is different from carrier information of the candidate cell in the second information, determining that current sending of the preamble to the candidate cell is an initial transmission, and resetting the power ramping counter; or if the identity of the candidate cell in the first information is the same as an identity of a candidate cell in the second information, and the carrier information of the candidate cell in the first information is the same as carrier information of the candidate cell in the second information, determining that current sending of the preamble to the candidate cell is a retransmission, and not resetting the power ramping counter.

In a possible implementation, the first information further includes value information, an identity of a candidate cell, and carrier information of the candidate cell. Determining, based on the first information and the second information, whether to reset the power ramping counter includes: if the carrier information of the candidate cell in the first information is the same as carrier information of a candidate cell in the second information, the identity of the candidate cell in the first information is the same as an identity of the candidate cell in the second information, and the value information in the first information is the same as value information in the second information, determining that current sending of the preamble to the candidate cell is an initial transmission, and resetting the power ramping counter; or if the carrier information of the candidate cell in the first information is the same as carrier information of a candidate cell in the second information, the identity of the candidate cell in the first information is the same as an identity of the candidate cell in the second information, and the value information in the first information is different from value information in the second information, determining that current sending of the preamble to the candidate cell is a retransmission, and not resetting the power ramping counter.

In a possible implementation, not resetting the power ramping counter is incrementing or maintaining the power ramping counter.

According to a third aspect, this application provides a communication method. The method may be applied to a terminal device, or may be applied to an apparatus (for example, a chip, a chip system, or a circuit) in a terminal device or an apparatus that can be used in collaboration with a terminal device. The following provides descriptions by using an example in which the method is applied to a terminal device. The method may include: receiving fourth indication information and fifth indication information, where the fourth indication information indicates service data, and the fifth indication information indicates a terminal device to perform a cell handover; and completing L2 processing on the fourth indication information and the fifth indication information, and then performing an L2 reset based on the fifth indication information.

In the solution provided in this application, an execution rule of the terminal device is constrained, so that after receiving a handover command, the terminal device determines when to reset a source cell, thereby reducing data loss and a quantity of retransmissions caused by an L2 reset, and reducing data loss and a quantity of retransmissions in a cell handover process.

In a possible implementation, performing the L2 processing on the fourth indication information and the fifth indication information includes: completing the L2 processing on the fourth indication information, and then performing the L2 processing on the fifth indication information.

In a possible implementation, the fourth indication information and the fifth indication information are located in different messages.

In a possible implementation, performing the L2 reset based on the fifth indication information includes: performing the L2 reset based on the fifth indication information after first duration that starts when the fifth indication information is received.

In a possible implementation, the fourth indication information is received by using a first hybrid automatic repeat request (hybrid automatic repeat request, HARQ) process, and the fifth indication information is received by using a second HARQ process.

In a possible implementation, performing the L2 processing on the fourth indication information and the fifth indication information includes: when the fifth indication information is received by using the second HARQ process, first completing the L2 processing on data received in another HARQ process and the fourth indication information in the second HARQ process, and then performing the L2 processing on the fifth indication information.

In a possible implementation, completing the L2 processing on the fourth indication information and the fifth indication information, and then performing the L2 reset based on the fifth indication information includes: when the fifth indication information is received by using the second HARQ process, first performing L2 processing on the data received in the another HARQ process and the fourth indication information and the fifth indication information in the second HARQ process, and then performing the L2 reset based on the fifth indication information in the second HARQ process.

In a possible implementation, the L2 processing includes one or more of the following: medium access control (medium access control, MAC) processing, radio link control (radio link control, RLC) processing, packet data convergence protocol (packet data convergence protocol, PDCP) processing, service data adaptation protocol (service data adaptation protocol, SDAP) processing, and delivery to a user plane (user plane function, UPF) network element.

In a possible implementation, the L2 reset includes one or more of the following: HARQ buffer clearing, a MAC reset, RLC re-establishment, and PDCP re-establishment.

According to a fourth aspect, an embodiment of this application provides a communication apparatus. The communication apparatus may be a terminal device, or may be an apparatus (for example, a chip, a chip system, or a circuit) in a terminal device.

For beneficial effects, refer to descriptions in the first aspect. Details are not described herein again. The communication apparatus has a function of implementing the behavior in the method example in the first aspect. The function may be implemented by hardware, or may be implemented by hardware executing corresponding software. The hardware or the software includes one or more modules corresponding to the foregoing function.

In a possible implementation, the communication apparatus includes:

a receiving unit, configured to receive first indication information, where the first indication information indicates a terminal device to send a preamble to a first candidate cell, and the first indication information includes first information; and

a determining unit, configured to determine, based on the first information and second information, whether to reset a power ramping counter, where the second information is included in second indication information, and the second indication information is indication information that indicates the terminal device to send a preamble to a second candidate cell and that is sent before the first indication information.

In a possible implementation, when determining, based on the first information and the second information, whether to reset the power ramping counter, the determining unit is specifically configured to:

if the first information is different from the second information, determine that current sending of the preamble to the candidate cell is an initial transmission, and reset the power ramping counter; or

if the first information is the same as the second information, determine that current sending of the preamble to the candidate cell is a retransmission, and not reset the power ramping counter.

In a possible implementation, the first information and the second information include value information or an identity of a candidate cell.

In a possible implementation, the first information and the second information include an identity of a candidate cell and value information.

When determining, based on the first information and the second information, whether to reset the power ramping counter, the determining unit is specifically configured to:

if the identity of the candidate cell in the first information is the same as the identity of the candidate cell in the second information, and the value information in the first information is different from the value information in the second information, determine that current sending of the preamble to the candidate cell is an initial transmission, and reset the power ramping counter; or

if the identity of the candidate cell in the first information is the same as the identity of the candidate cell in the second information, and the value information in the first information is the same as the value information in the second information, determine that current sending of the preamble to the candidate cell is a retransmission, and not reset the power ramping counter.

In a possible implementation, the first information further includes an identity of a candidate cell and carrier information of the candidate cell.

When determining, based on the first information and the second information, whether to reset the power ramping counter, the determining unit is specifically configured to:

if the identity of the candidate cell in the first information is the same as an identity of a candidate cell in the second information, and the carrier information of the candidate cell in the first information is different from carrier information of the candidate cell in the second information, determine that current sending of the preamble to the candidate cell is an initial transmission, and reset the power ramping counter; or

if the identity of the candidate cell in the first information is the same as an identity of a candidate cell in the second information, and the carrier information of the candidate cell in the first information is the same as carrier information of the candidate cell in the second information, determine that current sending of the preamble to the candidate cell is a retransmission, and not reset the power ramping counter.

In a possible implementation, the first information further includes value information, an identity of a candidate cell, and carrier information of the candidate cell.

When determining, based on the first information and the second information, whether to reset the power ramping counter, the determining unit is specifically configured to:

if the identity of the candidate cell in the first information is the same as an identity of a candidate cell in the second information, the carrier information of the candidate cell in the first information is the same as carrier information of the candidate cell in the second information, and the value information in the first information is different from value information in the second information, determine that current sending of the preamble to the candidate cell is an initial transmission, and reset the power ramping counter; or

if the identity of the candidate cell in the first information is the same as an identity of a candidate cell in the second information, the carrier information of the candidate cell in the first information is the same as carrier information of the candidate cell in the second information, the carrier information of the candidate cell in the first information is the same as carrier information of the candidate cell in the second information, and the value information in the first information is the same as value information in the second information, determine that current sending of the preamble to the candidate cell is a retransmission, and not reset the power ramping counter.

In a possible implementation, not resetting the power ramping counter is incrementing or maintaining the power ramping counter.

According to a fifth aspect, an embodiment of this application provides a communication apparatus. The communication apparatus may be a terminal device, or may be an apparatus (for example, a chip, a chip system, or a circuit) in a terminal device.

For beneficial effects, refer to descriptions in the second aspect. Details are not described herein again. The communication apparatus has a function of implementing the behavior in the method example in the second aspect. The function may be implemented by hardware, or may be implemented by hardware executing corresponding software. The hardware or the software includes one or more modules corresponding to the foregoing function.

In a possible implementation, the communication apparatus includes:

a starting unit, configured to receive first indication information, and start or restart a timer, where the first indication information indicates a terminal device to send a preamble to a first candidate cell; and
a determining unit, configured to determine, based on the timer, whether to reset a power ramping counter.

In a possible implementation, when determining, based on the timer, whether to reset the power ramping counter, the determining unit is specifically configured to:
if the timer expires, determine to reset the power ramping counter.

In a possible implementation, the first indication information includes first information.

When determining, based on the timer, whether to reset the power ramping counter, the determining unit is specifically configured to:
receive third indication information during running of the timer, where the third indication information includes second information, and second indication information indicates the terminal device to send a preamble to a second candidate cell; and determine, based on the first information and the second information, whether to reset the power ramping counter.

In a possible implementation, when determining, based on the timer, whether to reset the power ramping counter, the determining unit is specifically configured to:
if the first information is different from the second information, determine that current sending of the preamble to the candidate cell is an initial transmission, and reset the power ramping counter; or if the first information is the same as the second information, determine that current sending of the preamble to the candidate cell is a retransmission, and not reset the power ramping counter.

In a possible implementation, the first information and the second information include value information or an identity of a candidate cell.

In a possible implementation, the first information and the second information include an identity of a candidate cell and value information.

When determining, based on the first information and the second information, whether to reset the power ramping counter, the determining unit is specifically configured to:

if the identity of the candidate cell in the first information is the same as the identity of the candidate cell in the second information, and the value information in the first information is different from the value information in the second information, determine that current sending of the preamble to the candidate cell is an initial transmission, and reset the power ramping counter; or
if the identity of the candidate cell in the first information is the same as the identity of the candidate cell in the second information, and the value information in the first information is the same as the value information in the second information, determine that current sending of the preamble to the candidate cell is a retransmission, and not reset the power ramping counter.

In a possible implementation, the first information further includes an identity of a candidate cell and carrier information of the candidate cell.

When determining, based on the first information and the second information, whether to reset the power ramping counter, the determining unit is specifically configured to:

if the identity of the candidate cell in the first information is the same as an identity of a candidate cell in the second information, and the carrier information of the candidate cell in the first information is different from carrier information of the candidate cell in the second information, determine that current sending of the preamble to the candidate cell is an initial transmission, and reset the power ramping counter; or
if the identity of the candidate cell in the first information is the same as an identity of a candidate cell in the second information, and the carrier information of the candidate cell in the first information is the same as carrier information of the candidate cell in the second information, determine that current sending of the preamble to the candidate cell is a retransmission, and not reset the power ramping counter.

In a possible implementation, the first information further includes value information, an identity of a candidate cell, and carrier information of the candidate cell.

When determining, based on the first information and the second information, whether to reset the power ramping counter, the determining unit is specifically configured to:

if the identity of the candidate cell in the first information is the same as an identity of a candidate cell in the second information, the carrier information of the candidate cell in the first information is the same as carrier information of the candidate cell in the second information, and the value information in the first information is different from value information in the second information, determine that current sending of the preamble to the candidate cell is an initial transmission, and reset the power ramping counter; or

if the identity of the candidate cell in the first information is the same as an identity of a candidate cell in the second information, the carrier information of the candidate cell in the first information is the same as carrier information of the candidate cell in the second information, the carrier information of the candidate cell in the first information is the same as carrier information of the candidate cell in the second information, and the value information in the first information is the same as value information in the second information, determine that current sending of the preamble to the candidate cell is a retransmission, and not reset the power ramping counter.

In a possible implementation, not resetting the power ramping counter is incrementing or maintaining the power ramping counter.

According to a sixth aspect, an embodiment of this application provides a communication apparatus. The communication apparatus may be a terminal device, or may be an apparatus (for example, a chip, a chip system, or a circuit) in a terminal device.

For beneficial effects, refer to descriptions in the third aspect. Details are not described herein again. The communication apparatus has a function of implementing the behavior in the method example in the third aspect. The function may be implemented by hardware, or may be implemented by hardware executing corresponding software. The hardware or the software includes one or more modules corresponding to the foregoing function.

In a possible implementation, the communication apparatus includes:

a receiving unit, configured to receive fourth indication information and fifth indication information, where the fourth indication information indicates service data, and the fifth indication information indicates a terminal device to perform a cell handover; and
a processing unit, configured to complete L2 processing on the fourth indication information and the fifth indication information, and then perform an L2 reset based on the fifth indication information.

In a possible implementation, when performing the L2 processing on the fourth indication information and the fifth indication information, the processing unit is specifically configured to: complete the L2 processing on the fourth indication information, and then perform the L2 processing on the fifth indication information.

In a possible implementation, the fourth indication information and the fifth indication information are located in different messages.

In a possible implementation, when performing the L2 reset based on the fifth indication information, the processing unit is specifically configured to:
perform the L2 reset based on the fifth indication information after first duration that starts when the fifth indication information is received.

In a possible implementation, the fourth indication information is received by using a first HARQ process, and the fifth indication information is received by using a second HARQ process.

In a possible implementation, when completing the L2 processing on the fourth indication information and the fifth indication information, and then performing the L2 reset based on the fifth indication information, the processing unit is specifically configured to:
when the fifth indication information is received by using the second HARQ process, first perform the L2 processing on data received in another HARQ process and the fourth indication information and the fifth indication information in the second HARQ process, and then perform the L2 reset based on the fifth indication information in the second HARQ process.

In a possible implementation, the L2 processing includes one or more of the following: MAC processing, RLC processing, PDCP processing, SDAP processing, and delivery to a UPF network element.

In a possible implementation, the L2 reset includes one or more of the following: HARQ buffer clearing, a MAC reset, RLC re-establishment, and PDCP re-establishment.

According to a seventh aspect, a communication apparatus is provided. The communication apparatus may be a terminal device, or may be an apparatus (for example, a chip, a chip system, or a circuit) in a terminal device. The apparatus may include a processor, a memory, an input interface, and an output interface. The input interface is configured to receive information from another communication apparatus other than the communication apparatus. The output interface is configured to output information to the another communication apparatus other than the communication apparatus. The processor invokes a computer program stored in the memory to perform the communication method provided in any one of the first aspect or the implementations of the first aspect, any one of the second aspect or the implementations of the second aspect, or any one of the third aspect or the implementations of the third aspect.

According to an eighth aspect, this application provides a communication system. The communication system includes at least one terminal device and at least one access network device. When running in the communication system, the at least one terminal device and the at least one access network device are configured to perform any communication method according to the first aspect to the third aspect.

According to a ninth aspect, this application provides a computer-readable storage medium. The computer-readable storage medium stores computer instructions. When a computer program or the computer instructions are run, the method according to any one of the first aspect and the possible implementations of the first aspect, any one of the second aspect and the possible implementations of the second aspect, or any one of the third aspect and the possible implementations of the third aspect is performed.

According to a tenth aspect, this application provides a computer program product including executable instructions. When the computer program product runs on a communication device, the method according to any one of the first aspect and the possible implementations of the first aspect, any one of the second aspect and the possible implementations of the second aspect, or any one of the third aspect and the possible implementations of the third aspect is performed.

According to an eleventh aspect, this application provides a communication apparatus. The communication apparatus includes a processor, and may further include a memory, configured to implement the method according to any one of the first aspect and the possible implementations of the first aspect, any one of the second aspect and the possible implementations of the second aspect, or any one of the third aspect and the possible implementations of the third aspect. The communication apparatus may be a chip system. The chip system may include a chip, or may include a chip and another discrete device.

## BRIEF DESCRIPTION OF DRAWINGS

To describe the technical solutions in embodiments of this application more clearly, the following briefly describes the accompanying drawings for describing embodiments.

FIG. 1 is a diagram of a network architecture according to an embodiment of this application;
FIG. 2 is a diagram of a network architecture of an access network device according to an embodiment of this application;
FIG. 3 is a diagram of division based on protocol layers according to an embodiment of this application;
FIG. 4 is a flowchart of interaction during a cell handover according to an embodiment of this application;
FIG. 5 is a flowchart of interaction during a cell handover according to an embodiment of this application;
FIG. 6 is a diagram of interaction in a communication method according to an embodiment of this application;
FIG. 6A is a diagram of sending indication information according to an embodiment of this application;
FIG. 7 is a diagram of interaction in another communication method according to an embodiment of this application;
FIG. 7A is a diagram of sending indication information according to an embodiment of this application;
FIG. 8 is a diagram of interaction in still another communication method according to an embodiment of this application;
FIG. 9 is a diagram of a structure of a communication apparatus according to an embodiment of this application;
FIG. 10 is a diagram of a structure of another communication apparatus according to an embodiment of this application;
FIG. 11 is a diagram of a structure of still another communication apparatus according to an embodiment of this application;
FIG. 12 is a diagram of a structure of still another communication apparatus according to an embodiment of this application; and
FIG. 13 is a diagram of a structure of a terminal device according to an embodiment of this application.

## DESCRIPTION OF EMBODIMENTS

In descriptions of this application, unless otherwise specified, "/" means "or". For example, A/B may indicate A or B. In this application, "and/or" describes only an association relationship between associated objects and indicates that there may be three relationships. For example, A and/or B may represent the following three cases: Only A exists, both A and B exist, and only B exists. In addition, "at least one" may mean one or more, and "a plurality of" may mean two or more. "At least one of ..." means listed items and any combination thereof. For example, "at least one of A, B, and C" or "at least one of A, B, or C" may indicate the following six cases: Only A exists, only B exists, only C exists, both A and B exist, both B and C exist, both A and C exist, and A, B, and C all exist. "First", "second", and the like do not limit a quantity and an execution sequence, and "first", "second", and the like do not indicate a definite difference.

It should be noted that, in this application, the word such as "example" or "for example" is used for representing giving an example, an illustration, or a description. Any embodiment or design scheme described as an "example" or "for example" in this application should not be understood as being more preferred or having more advantages than another embodiment or design scheme. To be precise, use of the word such as "example" or "for example" is intended to present a relative concept in a specific manner.

In descriptions of this application, an "indication" may include a direct indication and an indirect indication, or may include an explicit indication and an implicit indication. Information indicated by a piece of information (for example, indication information described below) is referred to as to-be-indicated information. In a specific implementation process, there are a plurality of manners of indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and another part of the to-be-indicated information is known or pre-agreed on. In addition, specific information may be indicated by using an arrangement order, agreed on in advance (for example, stipulated in a protocol), of pieces of information, to reduce indication overheads to some extent.

A network architecture to which an embodiment of this application is applicable is first described below by using an example.

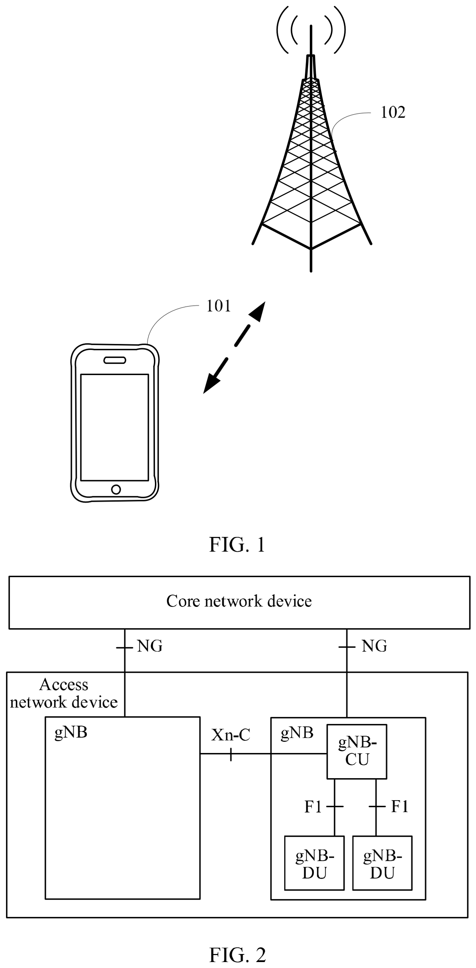

FIG. 1 is a diagram of a network architecture according to an embodiment of this application. As shown in FIG. 1, the network architecture may include a terminal device 101 and an access network device 102. The terminal device 101 may be connected to the access network device 102 in a wireless manner. It should be noted that a quantity and types of access network devices and terminal devices included in the network architecture shown in FIG. 1 are merely examples, and embodiments of this application are not limited thereto. For example, more or fewer terminal devices that communicate with the access network device may be further included. For brevity, these terminal devices are not shown in the accompanying drawings. In addition, in the network architecture shown in FIG. 1, although the access network device and the terminal device are shown, the application scenario may not be limited to including the access network device and the terminal device. For example, the application scenario may further include a core network device configured to bear a virtualized network function. This is clear to a person skilled in the art, and details are not described herein again.

The technical solutions in embodiments of this application may be applied to various communication systems, for example, may support a 3rd generation partnership project (3rd generation partnership project, 3GPP)-related cellular system (for example, a 5G communication system, a communication system integrating a plurality of wireless technologies (for example, a communication system integrating at least two technologies of 2G, 3G, 4G, or 5G), or a future-oriented evolved system (for example, a 6G access technology)), or a wireless fidelity (wireless fidelity, Wi-Fi) system, or a communication system integrating a 3GPP-related cellular system and another technology, a future communication system, or the like.

The access network device in this application is also referred to as an access node sometimes. The access network device has a wireless transceiver function, and is configured to communicate with a terminal. The access network device includes but is not limited to a base station (base station) in the foregoing communication system, an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access network device or a module of the access network device in an open radio access network ORAN (open RAN, ORAN) system, a base station in a future mobile communication system, an access node in a Wi-Fi system, or the like. Alternatively, the access network device may be a module or a unit that can implement some functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. The access network device may be a macro base station, a micro base station or an indoor base station, a relay node or a donor node, or a radio controller in a cloud radio access network (cloud radio access network, CRAN) scenario. Optionally, the access network device may alternatively be a server, a wearable device, a vehicle-mounted device, or the like. For example, an access network device in a vehicle-to-everything (vehicle-to-everything, V2X) technology may be a road side unit (road side unit, RSU). A plurality of access network devices in a communication system may be base stations of a same type, or may be base stations of different types. The base station may communicate with the terminal, or may communicate with the terminal through a relay station. The terminal may communicate with a plurality of base stations in different access technologies.

The terminal may also be referred to as a terminal device, user equipment (user equipment, UE), a mobile station, a mobile terminal, or the like. The terminal may be widely used in various communication scenarios, for example, may be used in device-to-device (device-to-device, D2D) communication, vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wear, smart transportation, a smart city, or the like. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal is not limited in this disclosure.

The access network device and/or the terminal may be fixed, or may be movable. The access network device and/or the terminal may be deployed on land, including an indoor device or an outdoor device, a handheld device, or a vehicle-mounted device, or may be deployed on water, or may be deployed on an airplane, a balloon, and a satellite in the air. Application scenarios of the access network device and the terminal are not limited in this disclosure. The access network device and the terminal device may be deployed in a same scenario or different scenarios. For example, the access network device and the terminal device are both deployed on land; or the access network device is deployed on land, and the terminal device is deployed on water. Examples are not provided one by one.

In this application, each element in the communication system may be considered as a network element in the communication system. Both the access network device and the terminal device may be collectively referred to as communication apparatuses. 102 in FIG. 1 may be referred to as a communication apparatus having a function of an access network device, and 101 in FIG. 1 may be referred to as a communication apparatus having a function of a terminal device.

In this application, the communication apparatus having the function of the access network device may be an access network device, a module (for example, a chip, a chip system, or a software module) in an access network device, or a control subsystem including the function of the access network device. For example, the control subsystem including the function of the access network device may be a control center in a scenario in which a terminal may be used, like a smart grid, industrial control, smart transportation, or a smart city.

In this application, the communication apparatus having the function of the terminal may be a terminal, or a module (for example, a chip, a chip system, a modem, or a software model) in a terminal, or an apparatus including a function of a terminal.

Further, FIG. 2 is a diagram of a network architecture of an access network device according to an embodiment of this application. As shown in FIG. 2, the access network device may include a CU and a DU. This design may be referred to as CU-DU separation. A plurality of DUs may be centrally controlled by one CU. For example, an interface between the CU and the DU is referred to as an F1 interface. A control plane (control panel, CP) interface may be F1-C, and a user plane (user panel, UP) interface may be F1-U. Specific names of interfaces are not limited in this disclosure.

Communication between the access network device and the terminal device may comply with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. For example, the user plane protocol layer structure may include at least one of the following: a service data adaptation protocol (service data adaptation protocol, SDAP) layer, a PDCP layer, an RLC layer, a MAC layer, a physical layer, or the like.

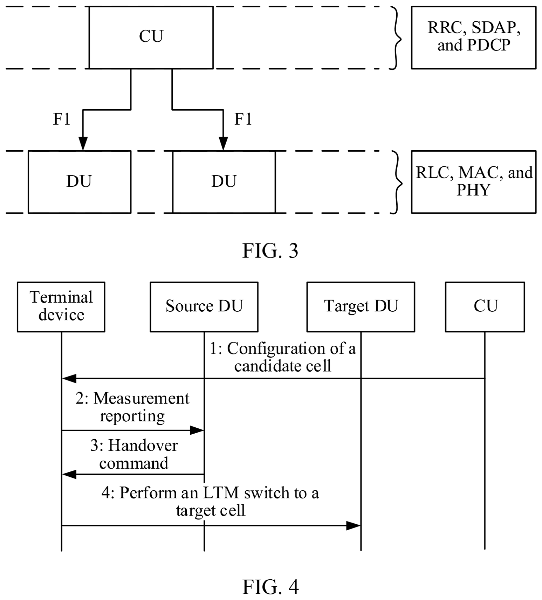

Division between the CU and the DU may be performed based on protocol layers of a wireless network. For example, FIG. 3 is a diagram of division based on protocol layers according to an embodiment of this application. As shown in FIG. 3, functions of a PDCP layer and protocol layers above the PDCP layer (for example, an RRC layer and an SDAP layer) are set on the CU, and functions of protocol layers below the PDCP layer (for example, an RLC layer, a MAC layer, and a PHY layer) are set on the DU. For another example, a function of a protocol layer above the PDCP layer is set on the CU, and functions of the PDCP layer and a protocol layer below the PDCP layer are set on the DU. This is not limited.

The division into processing functions of the CU and the DU based on protocol layers is merely an example, and may be division in another manner. For example, the CU or the DU may have functions of more protocol layers through division. For another example, the CU or the DU may have some processing functions of protocol layers through division. For example, some functions of the RLC layer and a function of a protocol layer above the RLC layer are set on the CU, and remaining functions of the RLC layer and a function of a protocol layer below the RLC layer are set on the DU. For another example, division into functions of the CU or the DU may alternatively be performed based on service types or other system requirements. For example, division may be performed based on latencies. Functions whose processing time needs to meet a latency requirement are set on the DU, and functions whose processing time does not need to meet the latency requirement are set on the CU.

Optionally, the CU may have one or more functions of a core network.

Optionally, the functions of the CU may be further divided, and a control plane and a user plane are split and implemented by different entities. Split entities are a control plane CU entity (namely, a CU-CP entity) and a user plane CU entity (namely, a CU-UP entity). The CU-CP entity and the CU-UP entity may be separately connected to the DU. In this application, an entity may be understood as a module or a unit, and may exist in a form of a hardware structure, a software module, or a combination of a hardware structure and a software module. This is not limited.

In embodiments of this application, the terminal device or a network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include, and/or carry instructions and/or data.

The following first provides definitions of technical terms that may occur in embodiments of this application. Terms used in implementations of this application are only used to explain specific embodiments of this application, but are not intended to limit this application.

(1) Protocol stack

A control plane protocol stack between a terminal device, an access network device, and a core network device may include a non-access stratum (non-access stratum, NAS) layer, an RRC layer, a PDCP layer, an RLC layer, a MAC layer, and a PHY layer.

NAS layer: a non-access stratum, located between UE and an AMF of a core network, and mainly responsible for registration management, session management, authentication control, and the like. Interaction between the UE and the core network is implemented through a NAS message.

RRC layer: layer 3, a radio resource control layer, mainly responsible for a control plane process related to a radio access network.

PDCP layer: layer 2, a packet data convergence protocol layer, mainly responsible for providing a transmission service for a radio bearer (radio bearer, RB). Main functions include sequence number addition, compression, encryption and decryption, integrity protection and verification, and the like.

RLC layer: layer 2, a radio link control layer. The RLC layer communicates with the PDCP layer through an RLC channel, and communicates with the MAC layer through a logical channel. Main functions include segmentation and reassembly of RLC service data units (service data units, SDU), automatic repeat request (automatic repeat request, ARQ) error correction, repeated detection, and the like.

MAC layer: layer 2, a medium access control layer, mainly responsible for processing mapping between a logical channel and a transport channel and scheduling radio resources. Main functions include mapping between a logical channel and a transport channel, logical channel multiplexing, demultiplexing, and scheduling, and the like.

PHY layer: layer 1, a physical layer, located at a bottom layer of an air interface protocol stack, and mainly responsible for encoding, modulation, multi-antenna processing, time-frequency resource mapping, and the like.

(2) L1/L2 triggered mobility (L1/L2 triggered mobility, LTM)

L1 may be a physical layer, and L2 may be a MAC/RLC/PDCP/SDAP layer. The LTM means that a handover-related operation is mainly performed at L1 and/or L2. For example, a terminal device sends an L1 measurement result to an access network device by using physical layer control signaling (carried on a physical uplink control channel (physical uplink control channel, PUCCH)). A physical layer of the access network device reads the L1 measurement result, and based on the measurement result, a handover decision made by the access network device is sent to the terminal device by using L1/L2 signaling, where the L1/L2 signaling may be a message carried on a physical downlink control channel (physical downlink control channel, PDCCH), or may be a MAC control element (MAC control element, MAC CE).

It should be noted that L1/L2 may be understood as L1 and/or L2. When a relationship is "and", an operation related to a handover process may be mainly completed by L1 and L2 together. When a relationship is "or", an operation related to a handover process is completed by L1 or L2.

An LTM switch may be applied to different scenarios, such as intra-DU, inter-DU, and inter-CU. Although specific signaling exchange content varies, the basic idea remains consistent. The following uses a cell handover between different DUs under a same CU as an example for description. FIG. 4 is a flowchart of interaction during a cell handover according to an embodiment of this application. As shown in FIG. 4, a main process of the cell handover may be as follows:

1: A CU sends a configuration of a candidate cell to a terminal device. The CU may send configuration information of the candidate cell to the terminal device through a source DU. For each candidate cell, preconfiguration information includes an identity, a configuration (for example, an AS access configuration), and the like of the candidate cell. After receiving the preconfiguration information, UE does not disconnect from a source cell.

2: The terminal device performs measurement reporting to the source DU. The terminal device sends a measurement result to the source DU, where the measurement result may include at least one of the following: an L1 measurement result of the source cell and an L1 measurement result of at least one candidate cell. The L1 measurement result of the source cell and/or the L1 measurement result of the candidate cell may be a cell-level measurement result, or may be a beam-level measurement result.

3: The source DU sends a handover command to the terminal device. The source DU sends the handover command to the terminal device, and sends identity information of an associated target cell to the terminal device by using L1/L2 signaling, where the L1/L2 signaling is sent by using a communication resource of the source cell. The target cell is one or more of candidate cells.

4: The terminal device performs an LTM switch to a target DU, to be handed over to the target cell. The terminal device may access the target cell by using the configuration information that corresponds to the target cell and that is received in step 1, and upon successful access, start to perform uplink and downlink data transmission with the target cell. The terminal device may access the target cell in a random access manner, or may access the target cell in a random-access-less manner. In a random-access-less handover process, the terminal device sends an uplink message to the target cell by using an uplink grant (UL grant) of the target cell. After receiving the message, the target cell may consider that the terminal device is successfully handed over to the target cell. A prerequisite for the terminal device to perform a random-access-less handover is that the terminal device has obtained uplink synchronization information of the target cell, for example, TA.

It should be noted that, before the cell handover occurs, the target DU may also be referred to as a candidate DU, and when the handover occurs, a candidate DU that manages the target cell may also be referred to as a target DU. That the terminal device communicates with a cell may be understood as that the terminal device communicates with an access network device to which the cell belongs, or the terminal device performs communication by using a communication resource of the cell. For example, that the terminal device sends a message to the source cell may be understood as that the terminal device sends a message to the source DU, or the terminal device sends a message to a source access network device, or the terminal device sends a message by using the communication resource of the source cell.

In addition, the target cell is one of the candidate cells. When the terminal device receives the handover command and performs the cell handover, a candidate cell may be referred to as a target cell. Similarly, the target DU is one of candidate DUs. When the terminal device receives the handover command and performs the cell handover, a candidate DU may be referred to as a target DU.

It should be understood that definitions of the foregoing technical terms are merely examples. For example, with continuous development of technologies, ranges of the foregoing definitions may also change. This is not limited in embodiments of this application.

First, for ease of understanding embodiments of this application, a technical problem to be specifically resolved in this application is further proposed and analyzed. Currently, in a cell handover scenario, to reduce a handover latency and interruption time, and improve user experience of a terminal device, L1/L2 triggered mobility is proposed. The L1/L2 triggered mobility may also be referred to as an L1/L2 handover. In the L1/L2 handover, the terminal device may be indicated, by using L1 signaling (for example, downlink control information (downlink control information, DCI)) and/or L2 signaling (for example, a medium access control control element (medium access control control element, MAC CE)), to perform a handover. Implementation of the LTM includes a plurality of technical solutions. The following provides an early RACH+without random access response (random access response, RAR) solution as an example.

Early RACH may mean that a terminal device sends a preamble (for example, a Msg1) to a target cell before receiving a handover command, so that an access network device to which the target cell belongs calculates TA.

Without RAR may mean that the access network device does not need to return a RAR after receiving the preamble. The RAR may carry the TA. When the access network device does not return the RAR, the TA may be indicated to the terminal device in the handover command. Because the access network device does not return the RAR, the terminal device does not need to monitor the RAR.

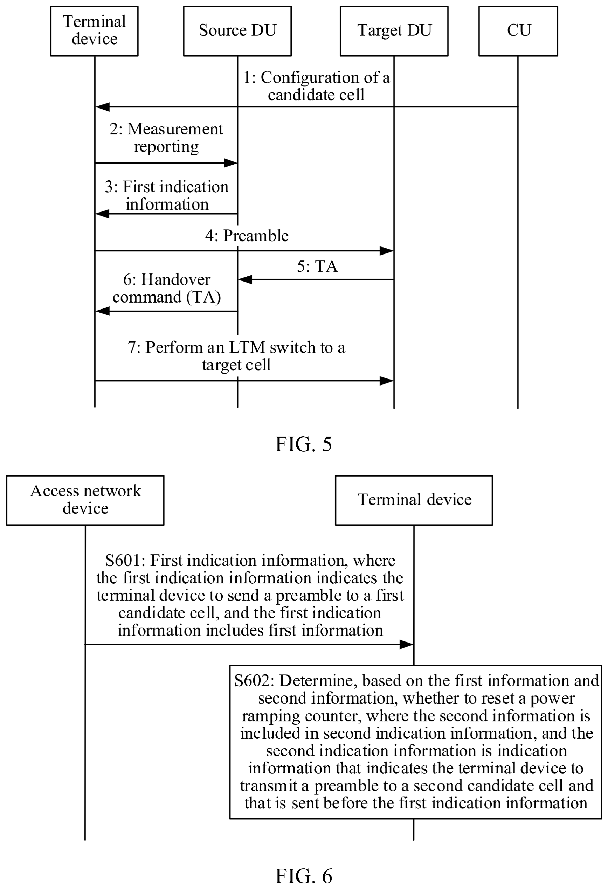

FIG. 5 is a flowchart of interaction during a cell handover according to an embodiment of this application. As shown in FIG. 5, a process includes the following steps.

1. A CU sends a configuration of a candidate cell to a terminal device. The CU may send configuration information of the candidate cell to the terminal device through a source DU. For each candidate cell, preconfiguration information includes an identity, a configuration (for example, an AS access configuration), and the like of the candidate cell. After receiving the preconfiguration information, UE does not disconnect from a source cell.

2. The terminal device performs measurement reporting to the source DU. The terminal device sends a measurement result to the source DU, where the measurement result may include at least one of the following: an L1 measurement result of the source cell and an L1 measurement result of at least one candidate cell. The L1 measurement result of the source cell and/or the L1 measurement result of the candidate cell may be a cell-level measurement result, or may be a beam-level measurement result.

3. The source DU sends first indication information (for example, a PDCCH order, namely a PDCCH order) to the terminal device, to indicate the terminal device to send a preamble to a cell.

4. The terminal device sends a preamble to a target DU. The terminal device may send the preamble to a specified cell based on indication information. In the flowchart, the terminal device sends the preamble to a target cell (the target DU).

5. The target DU sends TA to the source DU. The source DU determines, based on a measurement report reported by the UE, to perform an L1/L2 handover, determines the target cell, and optionally may further determine a target beam. The target DU may send a calculated TA value to the source DU. For example, the target DU may send the TA to the source DU through the CU.

6. The source DU sends a handover command to the terminal device. The source DU sends the handover command to the terminal device, and sends identity information of an associated target cell to the terminal device by using L1/L2 signaling, where the L1/L2 signaling is sent by using a communication resource of the source cell. The target cell is one or more of candidate cells. The handover command may include the TA value.

7. The terminal device performs an LTM switch to a target DU, to be handed over to the target cell.

In the foregoing solution, after the terminal device sends the preamble to the target DU (step 4), an access network device may fail to receive the preamble or fail to calculate the TA value due to a low transmit power. In this case, the access network device (for example, the source DU) needs to indicate the terminal device to perform a preamble retransmission and increase the transmit power of the terminal device. The access network device may send the indication information again, and indicate, in the indication information, a preamble retransmission or a preamble retransmission with power ramping. In this case, the terminal device retransmits the preamble after increasing the transmit power.

A 1-bit field (for example, denoted as a field A) in the indication information indicates whether current sending of the preamble is an initial transmission or a retransmission. For example, the field A being 0 may indicate an initial transmission. In this case, the terminal device may set a power ramping counter to an initial value (for example, set the power ramping counter to 1). The field A being 1 may indicate a retransmission. In this case, the terminal device may increment a value of the power ramping counter by 1. A larger value of the power ramping counter indicates a higher power for sending a preamble by the terminal device.

When the access network device sends indication information to the terminal device, to indicate the terminal device to perform an initial preamble transmission, the access network device may set the field A to 0. However, the terminal device may fail to receive the indication information and therefore does not send the preamble. Then, the access network device sends the indication information again, to indicate the terminal device to perform a preamble retransmission. In this case, the access network device may set the field A to 1. If the terminal device successfully receives the current indication information, how the terminal device understands content of the field A may lead to a result that does not meet an expectation of the access network device. Therefore, the foregoing solution may have the following technical problems: When the access network device sends indication information to the terminal device, to indicate the terminal device to perform an initial preamble transmission, the terminal device may fail to receive the indication information and therefore does not send the preamble. Then, the access network device sends the indication information again, to indicate the terminal device to perform a preamble retransmission. If the terminal device successfully receives the current indication information, how the terminal device determines whether a transmission is an initial transmission or a retransmission may lead to results that do not meet an expectation of the access network device, for example:

1. Because the terminal device has not performed an initial preamble transmission previously, but received indication information indicates a preamble retransmission, the terminal device may determine that this is an incorrect network indication, and ignore content of the current indication information, resulting a failure to smoothly obtain a TA value in advance and perform a random-access-less handover.

2. If the terminal device has counted the power ramping counter to a large value M, the terminal device fails to receive indication information indicating an initial preamble transmission from the access network device, and the terminal device receives indication information indicating a preamble retransmission, the terminal device counts the power ramping counter to M+1 and sends a preamble by using a high power that does not meet an expectation of the access network device, which may cause interference to another user in a cell, and cause an overall network capacity decrease.

3. If the access network device has previously indicated the terminal device to perform preamble sending, a TA value is obtained in advance after a plurality of times of power ramping, with the power ramping counter reaching M, and after a period of time, the access network device still does not indicate the terminal device to perform a cell handover using the TA value, the TA value becomes invalid/expires (TA expires), and the access network device indicates the terminal device again to obtain a TA value in advance. The access network device indicates the terminal device to perform an initial preamble transmission, but the terminal device fails to receive the indication information. As a result, subsequent indication information indicating a preamble retransmission is incorrectly parsed, and a preamble is sent using an excessively high power, which may cause interference to another user in a cell.

4. If the terminal device has counted the power ramping counter to a large value M when obtaining TA in advance for a cell 1, the access network device indicates the terminal device to obtain TA in advance for a cell 2 and uses indication information to indicate an initial preamble transmission, but the indication information is not received by the terminal device, and the terminal device receives indication information indicating a preamble retransmission and counts the power ramping counter to M+1, a preamble is sent to the cell 2 using an excessively high power, which may cause interference to another user in a cell.

5. In the foregoing steps, the access network device sends L1/L2 signaling to the terminal device, to indicate the terminal device to perform a cell handover, where the L1/L2 signaling may be a MAC CE, or may be downlink control information (downlink control information, DCI). An example in which the handover command is a MAC CE is used. After receiving a transport block (transport block, TB), the terminal device decodes the TB. A TB is also referred to as a protocol data unit (protocol data unit, PDU). One MAC PDU includes a plurality of MAC subPDUs (subPDUs). The MAC subPDU may be control information like the MAC CE, or may be service data content. When a TB/MAC PDU received by the terminal device includes a MAC CE for indicating a cell handover, the terminal device performs an L2 reset. When performing the L2 reset, the terminal device may clear/discard content of received service data, causing packet loss of some service data, or causing a packet retransmission by using an additional communication resource to compensate for packet loss.

Technical problems to be resolved in embodiments of this application may include: (1) If the terminal device loses some indication information, how to align, between the terminal device and the access network device, a power level for preamble sending, to avoid interference caused by using an excessively high power; and (2) determining when the terminal device performs a reset of the source cell after receiving a handover command, to reduce data loss and a quantity of retransmissions caused by an L2 reset.

Based on the foregoing descriptions, this application provides a communication method. The following separately describes the communication method by using the following embodiments. Some of these communication methods are only for some processes in a cell handover, and some may be applied to any one or more processes in the cell handover. It should be understood that these communication methods may be used in combination with each other. For example, one method may be used in a process of a cell handover, and another method may be used in another process, or both one method and another method may be used in a process of a cell handover.

It should be understood that a cell handover may change with evolution of technical solutions. The technical solutions provided in this application are not limited to an LTM switch technology, and are also applicable to another handover technology or another scenario in which uplink synchronization needs to be obtained. The technical solutions provided in this application are not limited to the following described processes. Further, descriptions of scenarios in embodiments of this application are merely examples, and the solutions in embodiments of this application are not limited to being applicable to only the described scenarios, and are also applicable to a scenario with a similar problem.

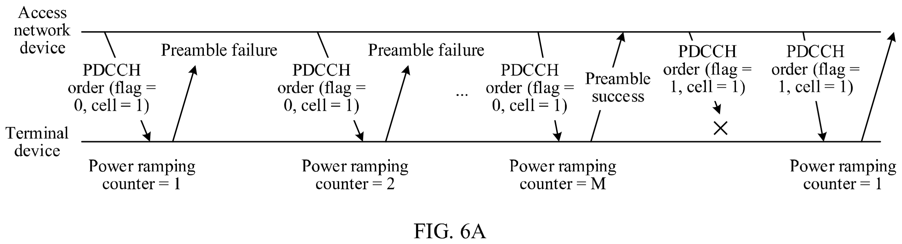

The terminal device in embodiments (for example, the following embodiments corresponding to FIG. 6 to FIG. 8) of this application may be the terminal device in the network architecture shown in FIG. 1. Functions performed by the terminal device in embodiments may alternatively be performed by an apparatus (for example, a chip, a chip system, or a circuit) in the terminal device. The access network device in embodiments may be the access network device in the network architecture shown in FIG. 1. Functions performed by the access network device in embodiments may alternatively be performed by an apparatus (for example, a chip, a chip system, or a circuit) in the access network device. In embodiments of this application, uniform descriptions are provided herein, and details are not described below again.

With reference to the foregoing network architecture, the following describes a communication method provided in an embodiment of this application. FIG. 6 is a diagram of interaction in a communication method according to an embodiment of this application. As shown in FIG. 6, the communication method may include S601 and S602.

S601: An access network device sends first indication information to a terminal device, where the first indication information indicates the terminal device to send a preamble to a first candidate cell, and the first indication information includes first information. Correspondingly, the terminal device receives the first indication information from the access network device.

In a process of in which the terminal device is handed over from a source cell to a target cell, the access network device may send the first indication information to the terminal device, where the first indication information indicates the terminal device to send the preamble to the first candidate cell. For example, the first indication information may be a PDCCH order 1 that indicates the terminal device to send the preamble (preamble) to the first candidate cell.

The first indication information includes the first information. The first information may have the following several possible implementations:

in a first possible implementation, the first information includes value information;
in a second possible implementation, the first information includes an identity of a candidate cell;
in a third possible implementation, the first information includes value information and an identity of a candidate cell;
in a fourth possible implementation, the first information includes an identity of a candidate cell and carrier information of the candidate cell;
in a fifth possible implementation, the first information includes value information and carrier information of a candidate cell; and
in a sixth possible implementation, the first information includes value information, an identity of a candidate cell, and carrier information of the candidate cell.

With reference to at least one of the first to the sixth possible implementations, the first information may further include beam indication information.

S602: The terminal device determines, based on the first information and second information, whether to reset a power ramping counter, where the second information is included in second indication information, and the second indication information is indication information that indicates the terminal device to send a preamble to a second candidate cell and that is sent before the first indication information.

After receiving the first indication information from the access network device, the terminal device may determine, based on the first information in the first indication information and the second information in the second indication information, whether to reset the power ramping counter.

For example, a transmit power for the preamble may be calculated by using the following formula:

set PREAMBLE_RECEIVED_TARGET_POWER to preamble Received Target Power + DELTA_PREAMBLE + (PREAMBLE_POWER_RAMPING_COUNTER - 1) × PREAMBLE_POWER_RAMPING_STEP.

The power ramping counter in this embodiment of this application may be understood as PREAMBLE_POWER_RAMPING_COUNTER in the formula for calculating the transmit power for the preamble. A larger value of the power ramping counter indicates a higher transmit power of the terminal device.

It should be noted that the terminal device may maintain the power ramping counter based on two granularities. In a first possible implementation, it is assumed that the terminal device maintains one power ramping counter for a plurality of candidate cells. In a second possible implementation, the terminal device maintains one power ramping counter for each candidate cell.

For the first possible implementation, the first candidate cell and the second candidate cell may be a same candidate cell or different candidate cells. The second indication information and the first indication information may be two consecutive pieces of indication information for a same candidate cell or different candidate cells. For example, if the terminal device maintains one power ramping counter for a plurality of candidate cells, the terminal device receives two pieces of indication information consecutively, where the indication information received first is indication information received immediately prior to the indication information received second. For example, the plurality of candidate cells include a cell 1 and a cell 2. If the terminal device receives, for the first time, the second indication information indicating the terminal device to send the preamble to the cell 1, and receives, for the second time, the first indication information indicating the terminal device to send the preamble to the cell 2, the second indication information may be understood as indication information received immediately prior to the first indication information. If the terminal device receives, for the first time, the second indication information indicating the terminal device to send the preamble to the cell 1, and receives, for the second time, the first indication information indicating the terminal device to send the preamble to the cell 1, the second indication information may be understood as indication information received immediately prior to the first indication information.

For the second possible implementation, the first candidate cell and the second candidate cell are a same candidate cell. The second indication information and the first indication information may be understood as two consecutive pieces of indication information for a same candidate cell. For example, candidate cells include a cell 1 and a cell 2. If the terminal device receives, for the first time, the second indication information indicating the terminal device to send the preamble to the cell 1, receives, for the second time, indication information indicating the terminal device to send the preamble to the cell 2, and receives, for the third time, the first indication information indicating the terminal device to send the preamble to the cell 1, the second indication information may be understood as indication information received immediately prior to the first indication information.

For example, the second indication information may be a PDCCH order 2 indicating the terminal device to send the preamble to the second candidate cell.

The second indication information includes the second information. Corresponding to the possible implementation of the first information in step S601, the second information may have the following several possible implementations:

in a first possible implementation, the second information includes value information;
in a second possible implementation, the second information includes an identity of a candidate cell;
in a third possible implementation, the second information includes value information and an identity of a candidate cell;
in a fourth possible implementation, the second information includes an identity of a candidate cell and carrier information of the candidate cell;
in a fifth possible implementation, the second information includes value information and carrier information of a candidate cell; and
in a sixth possible implementation, the second information includes value information, an identity of a candidate cell, and carrier information of the candidate cell.

With reference to at least one of the first to the sixth possible implementations, the second information may further include beam indication information.

The terminal device determines, based on the first information and the second information, whether to reset the power ramping counter. If the first information is different from the second information, it is determined that current sending of the preamble to the candidate cell is an initial transmission, and the power ramping counter is reset; or if the first information is the same as the second information, it is determined that current sending of the preamble to the candidate cell is a retransmission, and the power ramping counter is not reset. Specifically, the terminal device may determine, based on the first information and the second information, whether to reset the power ramping counter in the following several possible implementations:

in a first possible implementation, corresponding to the first possible implementation of the first information and the second information, the first information and the second information include value information. Whether a value corresponding to the value information is toggled may indicate whether current sending of the preamble from the terminal device to a candidate cell is a retransmission or an initial transmission, and indicate whether power ramping needs to be performed for the current sending of the preamble from the terminal device to the candidate cell. For example, the value information may be 1 bit, and the terminal device determines whether a value corresponding to the value information is toggled. For example, both a change of the value from 0 to 1 and a change of the value from 1 to 0 indicate toggling. If the value remains 0 or 1 in two transmissions, the value is not toggled. If toggling occurs, that is, if the value information in the first information is different from the value information in the second information, it is determined that the current sending of the preamble from the terminal device to the candidate cell is the initial transmission, and the power ramping counter is reset (the power ramping counter is reset to an initial value, and the power ramping counter with the initial value is used to calculate a power for sending the preamble). If no toggling occurs, that is, if the value information in the first information is the same as the value information in the second information, it is determined that the current sending of the preamble from the terminal device to the candidate cell is the retransmission, and the power ramping counter is not reset (for example, the power ramping counter is incremented, and the power ramping counter with an incremented value is used to calculate a power for sending the preamble; or the power ramping counter is maintained, and the power ramping counter with a current value is used to calculate a power for sending the preamble). It should be understood that the toggling may alternatively indicate the retransmission and not resetting the power ramping counter (for example, incrementing or maintaining the power ramping counter), and no toggling indicates the initial transmission and resetting the power ramping counter. This is not limited in this application.

Further, the terminal device may store/update the value corresponding to the value information. That is, the value information in the first information of the current indication is stored in a local variable, or a local variable is updated.

In this implementation, the terminal device may determine, depending on whether the value corresponding to the value information is toggled, whether the sending of the preamble to the candidate cell that the indication information indicates the terminal device to perform is the initial transmission or the retransmission, and whether the power ramping counter needs to be reset, thereby aligning, between the terminal device and the access network device, a power level for preamble sending, and avoiding interference caused by using an excessively high power.

In a second possible implementation, corresponding to the second possible implementation of the first information and the second information, the first information and the second information include an identity of a candidate cell. If the identity of the candidate cell in the first information is different from the identity of the candidate cell in the second information, it may be determined that current sending of the preamble from the terminal device to the candidate cell is an initial transmission, and the power ramping counter is reset; or if the identity of the candidate cell in the first information is the same as the identity of the candidate cell in the second information, it is determined that current sending of the preamble from the terminal device to the candidate cell is a retransmission, and the power ramping counter is not reset (for example, the power ramping counter is incremented or maintained). Further, the terminal device may store/update the identity of the candidate cell. That is, the identity of the candidate cell in the first information of the current indication is stored in a local variable, or a local variable is updated.

In this implementation, the terminal device may determine, based on the identity of the candidate cell, whether the sending of the preamble to the candidate cell that the indication information indicates the terminal device to perform is the initial transmission or the retransmission, and whether the power ramping counter needs to be reset, thereby aligning, between the terminal device and the access network device, a power level for preamble sending, and avoiding interference caused by using an excessively high power.

In a third possible implementation, corresponding to the third possible implementation of the first information and the second information, the first information and the second information include value information and an identity of a candidate cell. When the terminal device receives the first indication information, if the identity of the candidate cell in the first information is the same as the identity of the candidate cell in the second information, the terminal device may further determine whether the value information in the first information is the same as the value information in the second information, and determine whether to reset the power ramping counter. Specifically, if the identity of the candidate cell in the first information is the same as the identity of the candidate cell in the second information, and the value information in the first information is different from the value information in the second information, it is determined that current sending of the preamble from the terminal device to the candidate cell is an initial transmission, and the power ramping counter is reset; or if the identity of the candidate cell in the first information is the same as the identity of the candidate cell in the second information, and the value information in the first information is the same as the value information in the second information, it is determined that current sending of the preamble from the terminal device to the candidate cell is a retransmission, and the power ramping counter is not reset (for example, the power ramping counter is incremented or maintained). For descriptions of specific implementation of determining, by the terminal device based on the value information, whether to reset the power ramping counter, refer to the foregoing descriptions corresponding to the first possible implementation. Details are not described herein again. Further, the terminal device may store/update the value information and the identity of the candidate cell. That is, the value information and the identity of the candidate cell in the first information are stored in a local variable, or a local variable is updated.

In an embodiment, FIG. 6A is a diagram of sending indication information according to an embodiment of this application. As shown in FIG. 6A, an example in which indication information is a PDCCH order, value information is a flag, an identity of a candidate cell is cell, and not resetting the power ramping counter is incrementing the power ramping counter is used for description. The access network device may send a PDCCH order to the terminal device, to indicate the terminal device to send a preamble to a candidate cell, where the PDCCH order includes value information and an identity of the candidate cell. After receiving the PDCCH order, the terminal device may determine, based on the value information, whether preamble sending is an initial transmission or a retransmission. If the preamble sending is the initial transmission, the power ramping counter is reset. If the preamble sending is the retransmission, the power ramping counter is incremented. For example, for cell1 (cell = 1), if a flag in a PDCCH order received for the first time is 0, a flag in a PDCCH order received for the second time is 0, ..., and a flag in a PDCCH order received for the $M^{th}$ time is 0, that is, value information is the same, the terminal device determines that preamble sending is a retransmission, and the power ramping counter is incremented from 1 to 2, ..., to M. Assuming that the terminal device fails to receive a PDCCH order (including flag = 1, cell = 1) at a time, after the PDCCH order (including flag = 1, cell = 1) is received again, in comparison with the value information flag = 0 for the $M^{th}$ time, a value of the flag changes from 0 to 1, indicating toggling. In this case, the terminal device determines that preamble sending is an initial transmission, and the power ramping counter is reset to 1. Comparison with value information in a previous PDCCH order is performed, so that a problem that the terminal device fails to receive the indication information, and consequently subsequent indication information indicating a preamble retransmission is incorrectly parsed, and a preamble is sent using an excessively high power, which may cause interference to another user in a cell can be resolved.

In this implementation, the terminal device may determine, based on the identity of the candidate cell and the value information, whether the sending of the preamble to the candidate cell that the indication information indicates the terminal device to perform is the initial transmission or the retransmission, and whether the power ramping counter needs to be reset, thereby aligning, between the terminal device and the access network device, a power level for preamble sending, and avoiding interference caused by using an excessively high power. In comparison with the first possible implementation and the second possible implementation, in this implementation, whether the power ramping counter needs to be reset is determined by using two pieces of information, thereby improving determining accuracy.

In a fourth possible implementation, corresponding to the fourth possible implementation of the first information and the second information, the first information and the second information include an identity of a candidate cell and carrier information of the candidate cell. When the terminal device receives the first indication information, if the identity of the candidate cell in the first information is the same as the identity of the candidate cell in the second information, the terminal device may further determine whether the carrier information of the candidate cell in the first information is the same as the carrier information of the candidate cell in the second information, and determine whether to reset the power ramping counter. Specifically, if the identity of the candidate cell in the first information is the same as the identity of the candidate cell in the second information, and the carrier information of the candidate cell in the first information is different from the carrier information of the candidate cell in the second information, it is determined that current sending of the preamble from the terminal device to the candidate cell is an initial transmission, and the power ramping counter is reset; or if the identity of the candidate cell in the first information is the same as the identity of the candidate cell in the second information, and the carrier information of the candidate cell in the first information is the same as the carrier information of the candidate cell in the second information, it is determined that current sending of the preamble from the terminal device to the candidate cell is a retransmission, and the power ramping counter is not reset (for example, the power ramping counter is incremented or maintained).

The carrier information of the candidate cell may be an uplink carrier (for example, a supplementary uplink (supplementary uplink, SUL) carrier or a normal uplink (normal uplink, NUL) carrier) of the candidate cell.

Further, the terminal device may store/update the identity of the candidate cell and the carrier information of the candidate cell. That is, the identity of the candidate cell and the carrier information of the candidate cell in the first information are stored in a local variable, or a local variable is updated.

In this implementation, the terminal device may determine, based on the identity of the candidate cell and the carrier information of the candidate cell, whether the sending of the preamble to the candidate cell that the indication information indicates the terminal device to perform is the initial transmission or the retransmission, and whether the power ramping counter needs to be reset, thereby aligning, between the terminal device and the access network device, a power level for preamble sending, and avoiding interference caused by using an excessively high power. In comparison with the first possible implementation and the second possible implementation, in this implementation, whether the power ramping counter needs to be reset is determined by using two pieces of information, thereby improving determining accuracy.

In a fifth possible implementation, corresponding to the fifth possible implementation of the first information and the second information, the first information and the second information include value information and carrier information of a candidate cell. When the terminal device receives the first indication information, if the carrier information of the candidate cell in the first information is the same as the carrier information of the candidate cell in the second information, the terminal device may further determine whether the value information in the first information is the same as the value information in the second information, and determine whether to reset the power ramping counter. Specifically, if the carrier information of the candidate cell in the first information is the same as the carrier information of the candidate cell in the second information, and the value information in the first information is different from the value information in the second information, it is determined that current sending of the preamble from the terminal device to the candidate cell is an initial transmission, and the power ramping counter is reset; or if the carrier information of the candidate cell in the first information is the same as the carrier information of the candidate cell in the second information, and the value information in the first information is the same as the value information in the second information, it is determined that current sending of the preamble from the terminal device to the candidate cell is a retransmission, and the power ramping counter is not reset (for example, the power ramping counter is incremented or maintained). For descriptions of specific implementation of determining, by the terminal device based on the value information, whether to reset the power ramping counter, refer to the foregoing descriptions corresponding to the first possible implementation. Details are not described herein again. Further, the terminal device may store/update the value information and the carrier information of the candidate cell. That is, the value information and the carrier information of the candidate cell in the first information are stored in a local variable, or a local variable is updated.

In a sixth possible implementation, corresponding to the fifth possible implementation of the first information and the second information, the first information and the second information include value information, an identity of a candidate cell, and carrier information of the candidate cell. When the terminal device receives the first indication information, if the identity of the candidate cell in the first information is the same as the identity of the candidate cell in the second information, and the carrier information of the candidate cell in the first information is the same as the carrier information of the candidate cell in the second information, the terminal device may further determine whether the value information in the first information is the same as the value information in the second information, and determine whether to reset the power ramping counter. Specifically, if the identity of the candidate cell in the first information is the same as the identity of the candidate cell in the second information, the carrier information of the candidate cell in the first information is the same as the carrier information of the candidate cell in the second information, and the value information in the first information is different from the value information in the second information, it is determined that current sending of the preamble from the terminal device to the candidate cell is an initial transmission, and the power ramping counter is reset; or if the identity of the candidate cell in the first information is the same as the identity of the candidate cell in the second information, the carrier information of the candidate cell in the first information is the same as the carrier information of the candidate cell in the second information, and the value information in the first information is the same as the value information in the second information, it is determined that current sending of the preamble from the terminal device to the candidate cell is a retransmission, and the power ramping counter is not reset (for example, the power ramping counter is incremented or maintained).

Further, the terminal device may store/update the value information, the identity of the candidate cell, and the carrier information of the candidate cell. That is, the value information, the identity of the candidate cell, and the carrier information of the candidate cell in the first information are stored in a local variable, or a local variable is updated.

In this implementation, the terminal device may determine, based on the value information, the identity of the candidate cell, and the carrier information of the candidate cell, whether the sending of the preamble to the candidate cell that the indication information indicates the terminal device to perform is the initial transmission or the retransmission, and whether the power ramping counter needs to be reset, thereby aligning, between the terminal device and the access network device, a power level for preamble sending, and avoiding interference caused by using an excessively high power. In comparison with the first to the fourth possible implementations, in this implementation, whether the power ramping counter needs to be reset is determined by using three pieces of information, thereby improving determining accuracy.

With reference to at least one of the first to the sixth possible implementations, the first information and the second information may further include beam indication information. The beam indication information may indicate whether not resetting the power ramping counter is incrementing or maintaining the power ramping counter. That is, when determining not to reset the power ramping counter, the terminal device further determines, based on the beam indication information, whether to increment or maintain the power ramping counter. For example, if the beam indication information is the same (that is, a beam direction does not change), the terminal device may determine to increment the power ramping counter. If the beam indication information is different (that is, a beam direction changes), the terminal device may determine to maintain the power ramping counter.

It should be noted that, in the foregoing possible implementations, after the terminal device accesses a current serving cell, currently received second indication information may be understood as indication information received for the first time. That is, the terminal device determines that the current sending of the preamble to the candidate cell is the initial transmission, and the power ramping counter is reset. Because the terminal device is handed over to a serving cell, the current sending of the preamble may be directly determined as the initial transmission without comparing the indication information received for the first time in the current serving cell with value information in indication information received in a previous serving cell to determine whether toggling occurs. It should be understood that, when performing a cell handover, initial cell access, or a MAC layer reset, the terminal device clears the first information recorded previously, and considers indication information received subsequently as the indication information received for the first time. For example, after receiving the second indication information from the source cell and then being handed over to the target cell, the terminal device receives the first indication information, and the terminal device still considers the first indication information received in the target cell as the indication information received for the first time.

In this embodiment of this application, the terminal device may determine, based on comparison between the first information and the second information in two pieces of indication information for a same candidate cell, whether to reset the power ramping counter, thereby aligning understanding between the terminal device and the access network device on whether power ramping is needed, avoiding excessive power ramping by the terminal device, reducing interference during a cell handover, and improving an overall network capacity.

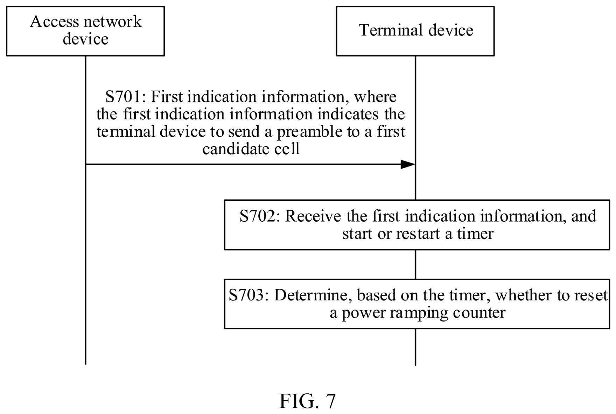

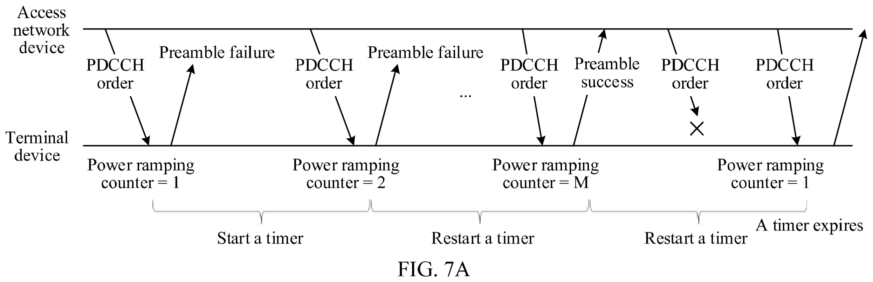

The following describes another communication method provided in an embodiment of this application. It should be understood that explanations of terms in different embodiments of this application may be mutually referenced. To avoid redundant descriptions, a same term may not be described again in different embodiments. FIG. 7 is a diagram of interaction in another communication method according to an embodiment of this application. As shown in FIG. 7, the communication method may include S701 to S703.

S701: An access network device sends first indication information to a terminal device, where the first indication information indicates the terminal device to send a preamble to a first candidate cell. Correspondingly, the terminal device receives the first indication information from the access network device.

In a process in which the terminal device is handed over from a source cell to a target cell, the access network device may send the first indication information to the terminal device, where the first indication information indicates the terminal device to send the preamble to the first candidate cell. For example, the first indication information may be a PDCCH order 1 that indicates the terminal device to send the preamble (preamble) to the first candidate cell.

S702: The terminal device receives the first indication information, and starts or restarts a timer.

After receiving the first indication information, the terminal device may start or restart the timer. It may be understood that each time the terminal device receives a piece of indication information, the terminal device starts or restarts a timer.

It should be noted that the terminal device may maintain a power ramping counter based on two granularities. In a possible implementation, it is assumed that the terminal device maintains a common timer for all candidate cells. That is, after receiving a piece of indication information indicating the terminal device to send a preamble to a candidate cell, the terminal device starts or restarts the timer, and resets a power ramping counter after the timer expires. Optionally, the terminal device maintains a common timer for all candidate cells and serving cells. When receiving indication information indicating to send a preamble to a serving cell, the terminal device may reset the power ramping counter.

In another possible implementation, the terminal device separately maintains a timer for each candidate cell. After receiving a piece of indication information indicating the terminal device to send a preamble to the first candidate cell, the terminal device determines, based on identity information of the first candidate cell, to start or restart a corresponding timer, and resets a power ramping counter corresponding to the first candidate cell after the corresponding timer expires. It should be understood that, in this implementation, the terminal device maintains a power ramping counter for each candidate cell, and maintains a power ramping counter for a serving cell, where the power ramping counter for the serving cell is different from that for the candidate cell.

S703: The terminal device determines, based on the timer, whether to reset a power ramping counter.

After receiving the first indication information, the terminal device may determine, within a preset time, whether to reset the power ramping counter. For example, in step S702, the terminal device may start or restart the timer, and use the timer to set the preset time.

In a possible implementation, when the timer expires, it is determined to restart the power ramping counter.

In another possible implementation, during running of the timer, the terminal device receives third indication information from the access network device. The first indication information includes first information, the third indication information includes second information, and the third indication information indicates the terminal device to send a preamble to a second candidate cell. The terminal device may determine, based on the first information and the second information, whether to reset the power ramping counter.

For specific related descriptions of the first indication information, the first information, and the second information, refer to the descriptions in steps S601 and S602. For specific related descriptions of determining, by the terminal device based on the first information and the second information, whether to reset the power ramping counter, refer to the descriptions in step S602. Details are not described again.

In an embodiment, FIG. 7A is a diagram of sending indication information according to an embodiment of this application. As shown in FIG. 7A, an example in which the indication information is a PDCCH order is used for description. After receiving the PDCCH order, the terminal device may start or restart the timer, and reset the power ramping counter when the timer expires. For example, the power ramping counter is reset from M to 1.

In this embodiment of this application, the terminal device may determine, depending on whether the timer expires, whether to reset the power ramping counter, thereby aligning understanding between the terminal device and the access network device on whether power ramping is needed, avoiding excessive power ramping by the terminal device, reducing interference during a cell handover, and improving an overall network capacity.

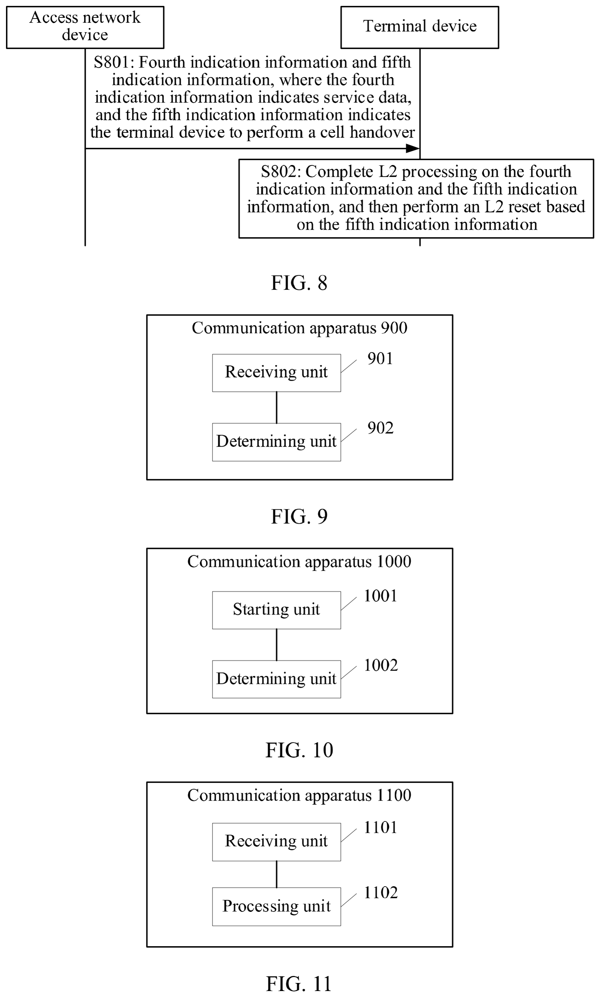

The following describes still another communication method provided in an embodiment of this application. FIG. 8 is a diagram of interaction in still another communication method according to an embodiment of this application. As shown in FIG. 8, the communication method may include S801 and S802.

S801: An access network device sends fourth indication information and fifth indication information to a terminal device, where the fourth indication information indicates service data, and the fifth indication information indicates the terminal device to perform a cell handover. Correspondingly, the terminal device receives the fourth indication information and the fifth indication information from the access network device.

In a cell handover scenario, the access network device may send the fourth indication information and the fifth indication information to the terminal device, where the fourth indication information indicates the service data, and the fifth indication information indicates the terminal device to perform the cell handover. After receiving the fourth indication information and the fifth indication information, the terminal device may decode the fourth indication information and the fifth indication information to obtain the service data and a cell handover indication command. For example, after receiving a TB/MAC PDU, the terminal device decodes the TB/MAC PDU. The MAC PDU includes two MAC subPDUs. A first MAC subPDU includes service data, and a second MAC subPDU includes an LTM MAC CE, namely a cell handover indication command.

In a first possible implementation, the fourth indication information and the fifth indication information are located in different messages. For example, the access network device maps the service data and the cell handover indication command to different TBs/MAC PDUs. For example, the access network device first sends the TB including the service data, and then sends the TB including the cell handover indication command.

In a second possible implementation, the fourth indication information and the fifth indication information are located in a same message. For example, the access network device maps the service data and the cell handover indication command to a same TB.

The access network device sending the fourth indication information and the fifth indication information to the terminal device may be applied to a scenario in which there are a plurality of HARQ processes. The terminal device may receive a plurality of pieces of fourth indication information and fifth indication information simultaneously or at nearly the same time through the plurality of HARQ processes. Specifically, the access network device may send the fourth indication information and the fifth indication information through different HARQ processes. For example, the access network device sends the fourth indication information through a first HARQ process, and sends the fifth indication information through a second HARQ process.

S802: The terminal device completes L2 processing on the fourth indication information and the fifth indication information, and then performs an L2 reset based on the fifth indication information.

For example, after receiving the fourth indication information and the fifth indication information, the terminal device may first complete L2 processing on a MAC subPDU including the service data and a MAC subPDU including the cell handover indication command, and then perform an L2 reset operation.

Performing the L2 processing on the fourth indication information and the fifth indication information may be specifically as follows: The L2 processing on the fourth indication information is completed, and then the L2 processing is performed on the fifth indication information. For example, the terminal device may first perform the L2 processing on a MAC subPDU including the service data, and then perform L2 processing on a MAC subPDU including the cell handover indication command after completing the L2 processing on the MAC subPDU including data content.

In a possible implementation, performing the L2 reset based on the fifth indication information is specifically as follows: The terminal device performs the L2 reset based on the fifth indication information after first duration that starts when the fifth indication information is received. For example, after receiving the TB including the cell handover indication command, the terminal device performs the L2 reset after the first duration. The first duration may be predefined in a protocol, for example, 2 ms, or may be configured by the access network device. This is not limited in this application.

Corresponding to step S801 in which the access network device may send the fourth indication information and the fifth indication information through the different HARQ processes, completing the L2 processing on the fourth indication information and the fifth indication information, and then performing the L2 reset based on the fifth indication information is specifically as follows:

In a possible implementation, when the fifth indication information is received through the second HARQ process, the L2 processing is first performed on data received in another HARQ process and the fourth indication information and the fifth indication information in the second HARQ process, and then the L2 reset is performed based on the fifth indication information in the second HARQ process. For example, if a TB received by the terminal device through a HARQ process includes the cell handover indication command, the terminal device first processes another MAC subPDU that have been received, including another MAC subPDU in the TB in the HARQ process and a MAC subPDU in a TB in another HARQ process.

In another possible implementation, when the fifth indication information is received through the second HARQ process, the L2 processing on data received in another HARQ process and the fourth indication information in the second HARQ process is first completed, and then the L2 processing is performed on the fifth indication information.

The L2 processing may include one or more of the following: MAC processing, RLC processing, PDCP processing, SDAP processing, delivery to a UPF network element, and the like. The L2 reset may include one or more of the following: HARQ buffer clearing, a MAC reset, RLC re-establishment, and PDCP re-establishment.

Optionally, after the terminal device receives a cell handover indication command, for example, a MAC CE, if an identity of a target cell indicated in the MAC CE is not previously configured in an RRC candidate cell preconfiguration process, the terminal device may ignore the cell handover indication command. Optionally, the terminal device sends a report message to the access network device, to indicate that an incorrect/incomprehensible cell handover indication command is received. For example, the terminal device sends a MAC CE to the access network device, to report error information.

In the solution provided in this embodiment, an execution rule of the terminal device is constrained, so that after receiving a handover command, the terminal device determines when to reset a source cell, thereby reducing data loss and a quantity of retransmissions caused by an L2 reset, and reducing data loss and a quantity of retransmissions in a cell handover process.

The following describes another communication method provided in an embodiment of this application. After receiving a cell handover indication command, a terminal device may send an uplink message to a target cell by using a preconfigured uplink grant resource, to notify the target cell or a target access network device that the terminal device has accessed the target cell. A preconfigured uplink grant may be classified into a first-type preconfigured uplink grant and a second-type preconfigured uplink grant based on a use manner of the preconfigured uplink grant. The first-type preconfigured uplink grant includes a plurality of periodic uplink grant resources, and each uplink grant resource can be used by the terminal device. The second-type preconfigured uplink grant also includes a plurality of periodic uplink grant resources, and different uplink grant resources may be associated with different beam directions. For example, an uplink grant resource 1 is associated with a beam direction 1, and an uplink grant resource 2 is associated with a beam direction 2. When the terminal device needs to send data in the beam direction 2, the terminal device skips the uplink grant resource 1, and sends uplink data by using the uplink grant resource 2.

The terminal device receives configuration information of the target cell (for example, step 1 in FIG. 4), where the configuration information may include both the first-type preconfigured uplink grant and the second-type preconfigured uplink grant, or may include only a type of preconfigured uplink grant. After receiving a handover command (for example, step 3 in FIG. 4), the terminal device may send an uplink message by using a preconfigured uplink grant resource (for example, step 4 in FIG. 4), to notify the target cell of access of the terminal device in a handover process. For example, the uplink message may be an RRC reconfiguration complete message. For another example, the uplink message may further include identity information of UE. After receiving the handover command, the terminal device needs to select a preconfigured uplink grant resource to send the uplink message. There are the following several possible implementations.

Implementation 1: The terminal device sends the uplink message by using a second-type preconfigured uplink grant resource, and there is an association relationship between the selected uplink grant resource and a beam direction indicated by the handover command. Before completing a cell handover, the terminal device does not use (or suspends, does not validate, or does not activate) the first-type preconfigured uplink grant, and uses only the second-type preconfigured uplink grant resource for the handover. After completing the cell handover, the terminal device uses (or resumes, validates, or activates) the first-type preconfigured uplink grant. Optionally, the terminal device actively releases the second-type preconfigured uplink grant, or the terminal device waits for a release indication message from the target access network device, and then releases the second-type preconfigured uplink grant.

Implementation 2: The terminal device sends the uplink message by using a second-type preconfigured uplink grant resource, and there is an association relationship between the selected uplink grant resource and a beam direction indicated by the handover command. After completing a cell handover, the terminal device converts the second-type preconfigured uplink grant resource into a first-type preconfigured uplink grant resource. For example, the terminal device may use each uplink grant resource that periodically occurs, without selecting an uplink grant resource associated with a specific beam direction.

Implementation 3: When the terminal device has a first-type preconfigured uplink grant resource, each uplink grant resource that periodically occurs may be associated with a same beam direction. If a beam direction indicated by the handover command is the same as a beam direction associated with the first-type preconfigured uplink grant resource, the terminal device sends the uplink message by using (or enabling or activating) the first-type preconfigured uplink grant resource in a handover process; or if a beam direction indicated by the handover command is different from a beam direction associated with the first-type preconfigured uplink grant resource, the terminal device uses (or validates or activates) the first-type preconfigured uplink grant resource after completing a handover, and does not use (or suspends, does not validate, or does not activate) the first-type preconfigured uplink grant before completing the handover.

In the foregoing implementations, the terminal device can properly use the preconfigured uplink grant, to improve utilization of the preconfigured uplink grant in the handover process.

The following describes another communication method provided in an embodiment of this application. A terminal device receives configuration information of a target cell (for example, step 1 in FIG. 4), where the configuration information may include a preconfigured uplink grant. A target access network device may notify, by using an inter-station interaction message, a source access network device whether a preconfigured uplink grant is provided for UE. If the preconfigured uplink grant is provided, because the terminal device may access the target cell by using the preconfigured uplink grant, the source access network device does not need to send a notification message to the target access network device after sending a handover command. If no preconfigured uplink grant is provided, the source access network device needs to send a notification message to the target access network device after sending a handover command, to indicate the target access network device to actively provide an uplink grant for the UE. The notification message includes at least one of the following content: identity information of the target cell, identity information of the terminal device, and information about a beam used by the terminal device in the target cell.

For example, in a CU-DU separation architecture, a target DU notifies, in a preconfiguration phase, a CU and/or a source DU whether a preconfigured uplink grant of a target cell is provided. If the preconfigured uplink grant is provided, the source DU does not need to send a notification message to the target DU after sending a handover command. If no preconfigured uplink grant is provided, the source DU needs to send a notification message to the target DU after sending a handover command. It should be understood that the notification message sent from the source DU to the target DU may be forwarded by the CU. In a possible implementation, if no preconfigured uplink grant is provided, the source DU sends the notification message to the CU after sending the handover command, but the CU no longer sends the notification message to the target DU. The notification message includes at least one of the following content: identity information of the target cell, identity information of the terminal device, and information about a beam used by the terminal device in the target cell.

In the foregoing implementation, signaling overheads of inter-station communication can be reduced.

The foregoing describes the method embodiments provided in embodiments of this application. The following describes apparatus embodiments in embodiments of this application.

FIG. 9 is a diagram of a structure of a communication apparatus according to an embodiment of this application. The communication apparatus may be a terminal device, or may be an apparatus (for example, a chip, a chip system, or a circuit) in a terminal device. As shown in FIG. 9, the communication apparatus 900 includes at least a receiving unit 901 and a determining unit 902.

The receiving unit 901 is configured to receive first indication information, where the first indication information indicates a terminal device to send a preamble to a first candidate cell, and the first indication information includes first information.

The determining unit 902 is configured to determine, based on the first information and second information, whether to reset a power ramping counter, where the second information is included in second indication information, and the second indication information is indication information that indicates the terminal device to send a preamble to a second candidate cell and that is sent before the first indication information.

In an embodiment, when determining, based on the first information and the second information, whether to reset the power ramping counter, the determining unit 902 is specifically configured to:

if the first information is different from the second information, determine that current sending of the preamble to the candidate cell is an initial transmission, and reset the power ramping counter; or

if the first information is the same as the second information, determine that current sending of the preamble to the candidate cell is a retransmission, and not reset the power ramping counter.

In an embodiment, the first information and the second information include value information or an identity of a candidate cell.

In an embodiment, the first information and the second information include an identity of a candidate cell and value information.

When determining, based on the first information and the second information, whether to reset the power ramping counter, the determining unit 902 is specifically configured to:

if the identity of the candidate cell in the first information is the same as the identity of the candidate cell in the second information, and the value information in the first information is different from the value information in the second information, determine that current sending of the preamble to the candidate cell is an initial transmission, and reset the power ramping counter; or

if the identity of the candidate cell in the first information is the same as the identity of the candidate cell in the second information, and the value information in the first information is the same as the value information in the second information, determine that current sending of the preamble to the candidate cell is a retransmission, and not reset the power ramping counter.

In an embodiment, the first information further includes an identity of a candidate cell and carrier information of the candidate cell.

When determining, based on the first information and the second information, whether to reset the power ramping counter, the determining unit 902 is specifically configured to:

if the identity of the candidate cell in the first information is the same as an identity of a candidate cell in the second information, and the carrier information of the candidate cell in the first information is different from carrier information of the candidate cell in the second information, determine that current sending of the preamble to the candidate cell is an initial transmission, and reset the power ramping counter; or

if the identity of the candidate cell in the first information is the same as an identity of a candidate cell in the second information, and the carrier information of the candidate cell in the first information is the same as carrier information of the candidate cell in the second information, determine that current sending of the preamble to the candidate cell is a retransmission, and not reset the power ramping counter.

In an embodiment, the first information further includes value information, an identity of a candidate cell, and carrier information of the candidate cell.

When determining, based on the first information and the second information, whether to reset the power ramping counter, the determining unit 902 is specifically configured to:

if the identity of the candidate cell in the first information is the same as an identity of a candidate cell in the second information, the carrier information of the candidate cell in the first information is the same as carrier information of the candidate cell in the second information, and the value information in the first information is different from value information in the second information, determine that current sending of the preamble to the candidate cell is an initial transmission, and reset the power ramping counter; or

if the identity of the candidate cell in the first information is the same as an identity of a candidate cell in the second information, the carrier information of the candidate cell in the first information is the same as carrier information of the candidate cell in the second information, the carrier information of the candidate cell in the first information is the same as carrier information of the candidate cell in the second information, and the value information in the first information is the same as value information in the second information, determine that current sending of the preamble to the candidate cell is a retransmission, and not reset the power ramping counter.

In an embodiment, not resetting the power ramping counter is incrementing or maintaining the power ramping counter.

For more detailed descriptions of the receiving unit 901 and the determining unit 902, directly refer to related descriptions of the terminal device in the method embodiments shown in FIG. 6 to FIG. 8. Details are not described herein.

FIG. 10 is a diagram of a structure of another communication apparatus according to an embodiment of this application. The communication apparatus may be a terminal device, or may be an apparatus (for example, a chip, a chip system, or a circuit) in a terminal device. As shown in FIG. 10, the communication apparatus 1000 includes at least a starting unit 1001 and a determining unit 1002.

The starting unit 1001 is configured to receive first indication information, and start or restart a timer, where the first indication information indicates a terminal device to send a preamble to a first candidate cell.

The determining unit 1002 is configured to determine, based on the timer, whether to reset a power ramping counter.

In an embodiment, when determining, based on the timer, whether to reset the power ramping counter, the determining unit 1002 is specifically configured to:

if the timer expires, determine to reset the power ramping counter.

In an embodiment, the first indication information includes first information.

When determining, based on the timer, whether to reset the power ramping counter, the determining unit 1002 is specifically configured to:

receive second indication information during running of the timer, where the second indication information includes second information, and the second indication information indicates the terminal device to send a preamble to a second candidate cell; and determine, based on the first information and the second information, whether to reset the power ramping counter.

In an embodiment, when determining, based on the timer, whether to reset the power ramping counter, the determining unit 1002 is specifically configured to:

if the first information is different from the second information, determine that current sending of the preamble to the candidate cell is an initial transmission, and reset the power ramping counter; or if the first information is the same as the second information, determine that current sending of the preamble to the candidate cell is a retransmission, and not reset the power ramping counter.

In an embodiment, the first information and the second information include value information or an identity of a candidate cell.

In an embodiment, the first information and the second information include an identity of a candidate cell and value information.

When determining, based on the first information and the second information, whether to reset the power ramping counter, the determining unit 1002 is specifically configured to:

if the identity of the candidate cell in the first information is the same as the identity of the candidate cell in the second information, and the value information in the first information is different from the value information in the second information, determine that current sending of the preamble to the candidate cell is an initial transmission, and reset the power ramping counter; or

if the identity of the candidate cell in the first information is the same as the identity of the candidate cell in the second information, and the value information in the first information is the same as the value information in the second information, determine that current sending of the preamble to the candidate cell is a retransmission, and not reset the power ramping counter.

In an embodiment, the first information further includes an identity of a candidate cell and carrier information of the candidate cell.

When determining, based on the first information and the second information, whether to reset the power ramping counter, the determining unit 1002 is specifically configured to:

if the identity of the candidate cell in the first information is the same as an identity of a candidate cell in the second information, and the carrier information of the candidate cell in the first information is different from carrier information of the candidate cell in the second information, determine that current sending of the preamble to the candidate cell is an initial transmission, and reset the power ramping counter; or

if the identity of the candidate cell in the first information is the same as an identity of a candidate cell in the second information, and the carrier information of the candidate cell in the first information is the same as carrier information of the candidate cell in the second information, determine that current sending of the preamble to the candidate cell is a retransmission, and not reset the power ramping counter.

In an embodiment, the first information further includes value information, an identity of a candidate cell, and carrier information of the candidate cell.

When determining, based on the first information and the second information, whether to reset the power ramping counter, the determining unit 1002 is specifically configured to:

if the identity of the candidate cell in the first information is the same as an identity of a candidate cell in the second information, the carrier information of the candidate cell in the first information is the same as carrier information of the candidate cell in the second information, and the value information in the first information is different from value information in the second information, determine that current sending of the preamble to the candidate cell is an initial transmission, and reset the power ramping counter; or

if the identity of the candidate cell in the first information is the same as an identity of a candidate cell in the second information, the carrier information of the candidate cell in the first information is the same as carrier information of the candidate cell in the second information, the carrier information of the candidate cell in the first information is the same as carrier information of the candidate cell in the second information, and the value information in the first information is the same as value information in the second information, determine that current sending of the preamble to the candidate cell is a retransmission, and not reset the power ramping counter.

In an embodiment, not resetting the power ramping counter is incrementing or maintaining the power ramping counter.

For more detailed descriptions of the starting unit 1001 and the determining unit 1002, directly refer to related descriptions of the terminal device in the method embodiments shown in FIG. 6 to FIG. 8. Details are not described herein.

FIG. 11 is a diagram of a structure of still another communication apparatus according to an embodiment of this application. The communication apparatus may be a terminal device, or may be an apparatus (for example, a chip, a chip system, or a circuit) in a terminal device. As shown in FIG. 11, the communication apparatus 1100 includes at least a receiving unit 1101 and a processing unit 1102.

The receiving unit 1101 is configured to receive fourth indication information and fifth indication information, where the fourth indication information indicates service data, and the fifth indication information indicates a terminal device to perform a cell handover.

The processing unit 1102 is configured to complete L2 processing on the fourth indication information and the fifth indication information, and then perform an L2 reset based on the fourth indication information.

In an embodiment, when performing the L2 processing on the fourth indication information and the fifth indication information, the processing unit 1102 is specifically configured to: complete the L2 processing on the fourth indication information, and then perform the L2 processing on the fifth indication information.

In an embodiment, the fourth indication information and the fifth indication information are located in different messages.

In an embodiment, when performing the L2 reset based on the fifth indication information, the processing unit 1102 is specifically configured to:

perform the L2 reset based on the fifth indication information after first duration that starts when the fifth indication information is received.

In an embodiment, the fourth indication information is received by using a first HARQ process, and the fifth indication information is received by using a second HARQ process.

In an embodiment, performing the L2 processing on the fourth indication information and the fifth indication information includes: when the fifth indication information is received by using the second HARQ process, first completing the L2 processing on data received in another HARQ process and the fourth indication information in the second HARQ process, and then performing the L2 processing on the fifth indication information.

In an embodiment, when completing the L2 processing on the fourth indication information and the fifth indication information, and then performing the L2 reset based on the fifth indication information, the processing unit 1102 is specifically configured to:

when the fifth indication information is received by using the second HARQ process, first perform the L2 processing on data received in another HARQ process and the fourth indication information and the fifth indication information in the second HARQ process, and then perform the L2 reset based on the fifth indication information in the second HARQ process.

In an embodiment, the L2 processing includes one or more of the following: MAC processing, RLC processing, PDCP processing, SDAP processing, and delivery to a UPF network element.

In an embodiment, the L2 reset includes one or more of the following: HARQ buffer clearing, a MAC reset, RLC re-establishment, and PDCP re-establishment.

For more detailed descriptions of the receiving unit 1101 and the processing unit 1102, directly refer to related descriptions of the terminal device in the method embodiments shown in FIG. 6 to FIG. 8. Details are not described herein.

In the apparatus embodiments shown in FIG. 9 to FIG. 11, when the communication apparatus is a terminal device or a network device, the processing unit may be a processor, the sending unit may be a transmitter, and the receiving unit may be a receiver. When the communication apparatus is an apparatus (for example, a chip, a chip system, or a circuit) in a terminal device or a network device, the processing unit may be a processor, the sending unit may be an output interface, a pin, a circuit, or the like, and the receiving unit may be an input interface, a pin, a circuit, or the like.

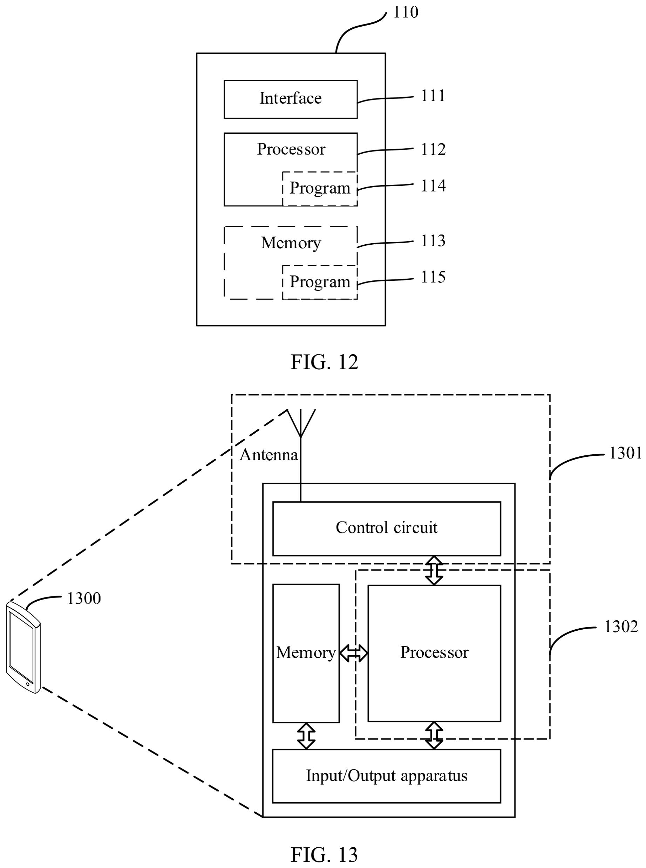

FIG. 12 is a diagram of a structure of still another communication apparatus according to an embodiment of this application. The apparatus 110 is configured to implement a function of a network element in this application. For example, the network element may be an access network device, a terminal device, a DU, or a CU. The apparatus 110 may be the network element, an apparatus that can be installed in the network element, or an apparatus that can be used in collaboration with the network element. This is not limited. For example, the apparatus may be a chip or a chip system. As shown in FIG. 12, the apparatus 110 includes an interface 111 and a processor 112. Optionally, the processor 112 is configured to execute a program 114. The processor 112 may store the program 114, or obtain the program 114 from another component or another device (for example, from a memory 113 or from a third-party website through downloading). Optionally, the apparatus 110 includes a memory 113. The memory 113 is configured to store a program 115. The program 115 may be pre-stored, or may be subsequently loaded. Optionally, the memory 113 may be further configured to store necessary data. These components operate together to provide various functions described in this application.

The processor 112 may include one or more processors, to serve as a combination of computing devices. The processor 112 may include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit or other appropriate hardware or firmware, and/or a combination of hardware and software configured to perform various functions described in this application. The processor 112 may be a general-purpose processor or a dedicated processor. For example, the processor 112 may be a baseband processor or a central processing unit. The baseband processor may be configured to process a communication protocol and communication data. The central processing unit may be configured to execute a software program and process data in the software program.

The interface 111 may include any appropriate hardware or software configured to enable communication with one or more computer devices (for example, a network element in this application). For example, in some embodiments, the interface 111 may include terminals and/or pins for coupling wires for a wired connection or for coupling wireless transceivers for a wireless connection. In some embodiments, the interface 111 may include a transmitter, a receiver, a transceiver, and/or an antenna. The interface may be configured to enable communication between computer devices (for example, network elements in this application) by using any available protocol (for example, a 3GPP standard protocol).

The program in this application means software in a broad sense. The software may be program code, a program, a subprogram, an instruction set, code, a code segment, a software module, an application program, a software application program, or the like. The program may be run in a processor and/or a computer, to perform various functions and/or processes described in this application.

The memory 113 may store necessary data required when the processor 112 executes software. The memory 113 may be implemented by using any appropriate storage technology. For example, the memory 113 may be any available storage medium that can be accessed by a processor and/or a computer. A non-limiting example of the storage medium is a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, an optical disk memory, a magnetic disk storage medium, a magnetic storage device, a flash memory, a register, a state memory, a remotely installed memory, a local or remote storage component, or any other medium that can carry or store software, data, or information and can be accessed by a processor/computer.

The memory 113 and the processor 112 may be disposed separately, or may be integrated together. The processor 112 may read information from the memory 113, and store and/or write information in the memory. The memory 113 may be integrated into the processor 112. The processor 112 and the memory 113 may be disposed in an integrated circuit (for example, an application-specific integrated circuit (application-specific integrated circuit, ASIC)). The integrated circuit may be disposed in a network element or another network node in this disclosure.

Optionally, the apparatus 110 in this embodiment of this application may be configured to perform the method described in FIG. 6 to FIG. 8 in embodiments of this application.

In an embodiment, the communication apparatus 110 may be a terminal device, or may be an apparatus (for example, a chip, a chip system, or a circuit) in a terminal device. When computer program instructions stored in the memory 113 are executed, the processor 112 is configured to perform an operation performed by the determining unit 902 in the foregoing embodiment, or is configured to perform an operation performed by the starting unit 1001 and the determining unit 1002 in the foregoing embodiment, or is configured to perform an operation performed by the processing unit 1102 in the foregoing embodiment. The terminal device or the apparatus in the terminal device may be further configured to perform various methods performed by the terminal device in the method embodiments in FIG. 6 to FIG. 8. Details are not described again.

FIG. 13 is a diagram of a structure of a terminal device according to an embodiment of this application. For ease of description, FIG. 13 shows only main components of the terminal device. As shown in FIG. 13, the terminal device 1300 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After a terminal is powered on, the processor may read a software program in a storage unit, interpret and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 13 shows only one memory and one processor. In an actual terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data, and the central processing unit is mainly configured to: control the entire terminal, execute a software program, and process data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a receiving/sending function may be considered as a transceiver unit 1301 of the terminal device 1300, and the processor having a processing function may be considered as a processing unit 1302 of the terminal device 1300. As shown in FIG. 13, the terminal device 1300 includes the transceiver unit 1301 and the processing unit 1302. The transceiver unit may also be referred to as a transceiver, a transceiver machine, a transceiver apparatus, or the like. Optionally, a component that is in the transceiver unit 1301 and that is configured to implement a receiving function may be considered as a receiving unit, and a component that is in the transceiver unit 1301 and that is configured to implement a sending function may be considered as a sending unit. In other words, the transceiver unit 1301 includes the receiving unit and the sending unit. For example, the receiving unit may also be referred to as a receiver, a receiver machine, or a receiving circuit, and the sending unit may also be referred to as a transmitter, a transmitter machine, or a transmitting circuit. Optionally, the receiving unit and the sending unit may be one integrated unit, or may be a plurality of independent units. The receiving unit and the sending unit may be at one geographical location, or may be distributed at a plurality of geographical locations.

In an embodiment, the transceiver unit 1301 is configured to perform an operation performed by the receiving unit 901 in the foregoing embodiment, or is configured to perform an operation performed by the receiving unit 1101 in the foregoing embodiment. The processing unit 1302 is configured to perform an operation performed by the determining unit 902 in the foregoing embodiment, or is configured to perform an operation performed by the starting unit 1001 and the determining unit 1002 in the foregoing embodiment, or is configured to perform an operation performed by the processing unit 1102 in the foregoing embodiment. The terminal device 1300 may be further configured to perform various methods performed by the terminal device in the method embodiments in FIG. 6 to FIG. 8. Details are not described again.

An embodiment of this application further provides a computer-readable storage medium, and the computer-readable storage medium stores a computer program. When the program is executed by a processor, a procedure related to the terminal device in the communication method provided in the foregoing method embodiments may be implemented.

An embodiment of this application further provides a computer program product. When the computer program product runs on a computer or a processor, the computer or the processor is enabled to perform one or more steps in any one of the foregoing communication methods. When the foregoing composition modules in the device are implemented in a form of a software functional unit and sold or used as an independent product, the modules may be stored in a computer-readable storage medium.

An embodiment of this application further provides a chip system, including at least one processor and a communication interface. The communication interface and the at least one processor are interconnected through a line. The at least one processor is configured to run a computer program or instructions to perform some or all steps of any method recorded in the method embodiments corresponding to FIG. 6 to FIG. 8. The chip system may include a chip, or may include a chip and another discrete device.

An embodiment of this application further provides a communication system. The system includes a terminal device and an access network device. For specific descriptions, refer to the communication methods shown in FIG. 6 to FIG. 8.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. As an example description rather than a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

It should be further understood that the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, with reference to units and algorithm steps in the examples described in embodiments provided in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in the form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

A sequence of the steps of the method in embodiments of this application may be adjusted, combined, or removed based on an actual requirement.

The modules/units in the apparatuses in embodiments of this application may be combined, divided, or removed based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

**Claims**

1.  A communication method, comprising:

    receiving first indication information, wherein the first indication information indicates a terminal device to send a preamble to a first candidate cell, and the first indication information comprises first information; and
    determining, based on the first information and second information, whether to reset a power ramping counter, wherein the second information is comprised in second indication information, and the second indication information is indication information that indicates the terminal device to send a preamble to the second candidate cell and that is sent before the first indication information.

2.  The method according to claim 1, wherein determining, based on the first information and the second information, whether to reset the power ramping counter comprises:

    if the first information is different from the second information, determining that current sending of the preamble to the candidate cell is an initial transmission, and resetting the power ramping counter; or
    if the first information is the same as the second information, determining that current sending of the preamble to the candidate cell is a retransmission, and skipping resetting the power ramping counter.

3.  The method according to claim 2, wherein the first information and the second information comprise value information or an identity of a candidate cell.

4.  The method according to claim 3, wherein the first information and the second information further comprise beam indication information, and when it is determined that the current sending of the preamble to the candidate cell is the retransmission, skipping resetting the power ramping counter comprises:
    if the beam indication information in the first information is the same as the beam indication information in the second information, incrementing the power ramping counter.

5. The method according to claim 1, wherein the first information and the second information comprise an identity of a candidate cell and value information; and
determining, based on the first information and the second information, whether to reset the power ramping counter comprises:

if the identity of the candidate cell in the first information is the same as the identity of the candidate cell in the second information, and the value information in the first information is different from the value information in the second information, determining that current sending of the preamble to the candidate cell is an initial transmission, and resetting the power ramping counter; or
if the identity of the candidate cell in the first information is the same as the identity of the candidate cell in the second information, and the value information in the first information is the same as the value information in the second information, determining that current sending of the preamble to the candidate cell is a retransmission, and skipping resetting the power ramping counter.

6. The method according to claim 1, wherein the first information further comprises an identity of a candidate cell and carrier information of the candidate cell; and
determining, based on the first information and the second information, whether to reset the power ramping counter comprises:

if the identity of the candidate cell in the first information is the same as an identity of a candidate cell in the second information, and the carrier information of the candidate cell in the first information is different from carrier information of the candidate cell in the second information, determining that current sending of the preamble to the candidate cell is an initial transmission, and resetting the power ramping counter; or
if the identity of the candidate cell in the first information is the same as an identity of a candidate cell in the second information, and the carrier information of the candidate cell in the first information is the same as carrier information of the candidate cell in the second information, determining that current sending of the preamble to the candidate cell is a retransmission, and skipping resetting the power ramping counter.

7. The method according to claim 1, wherein the first information further comprises value information, an identity of a candidate cell, and carrier information of the candidate cell; and
determining, based on the first information and the second information, whether to reset the power ramping counter comprises:

if the identity of the candidate cell in the first information is the same as an identity of a candidate cell in the second information, the carrier information of the candidate cell in the first information is the same as carrier information of the candidate cell in the second information, and the value information in the first information is different from value information in the second information, determining that current sending of the preamble to the candidate cell is an initial transmission, and resetting the power ramping counter; or
if the identity of the candidate cell in the first information is the same as an identity of a candidate cell in the second information, the carrier information of the candidate cell in the first information is the same as carrier information of the candidate cell in the second information, the carrier information of the candidate cell in the first information is the same as carrier information of the candidate cell in the second information, and the value information in the first information is the same as value information in the second information, determining that current sending of the preamble to the candidate cell is a retransmission, and skipping resetting the power ramping counter.

8. The method according to any one of claims 2 to 7, wherein skipping resetting the power ramping counter is incrementing or maintaining the power ramping counter.

9. A communication method, comprising:

receiving first indication information, and starting or restarting a timer, wherein the first indication information indicates a terminal device to send a preamble to a first candidate cell; and
determining, based on the timer, whether to reset a power ramping counter.

10. The method according to claim 9, wherein determining, based on the timer, whether to reset the power ramping counter comprises:
if the timer expires, determining to reset the power ramping counter.

**EP 4 746 491 A1**

11. The method according to claim 9, wherein the first indication information comprises first information, and determining, based on the timer, whether to reset the power ramping counter comprises:

receiving third indication information during running of the timer, wherein the third indication information comprises second information, and the third indication information indicates the terminal device to send a preamble to the second candidate cell; and
determining, based on the first information and the second information, whether to reset the power ramping counter.

12. The method according to claim 11, wherein determining, based on the first information and the second information, whether to reset the power ramping counter comprises:

if the first information is different from the second information, determining that current sending of the preamble to the candidate cell is an initial transmission, and resetting the power ramping counter; or
if the first information is the same as the second information, determining that current sending of the preamble to the candidate cell is a retransmission, and skipping resetting the power ramping counter.

13. The method according to claim 12, wherein the first information and the second information comprise value information or an identity of a candidate cell.

14. The method according to claim 13, wherein the first information and the second information further comprise beam indication information, and when it is determined that the current sending of the preamble to the candidate cell is the retransmission, skipping resetting the power ramping counter comprises:
if the beam indication information in the first information is the same as the beam indication information in the second information, incrementing the power ramping counter.

15. The method according to claim 11, wherein the first information and the second information comprise an identity of a candidate cell and value information; and
determining, based on the first information and the second information, whether to reset the power ramping counter comprises:

if the identity of the candidate cell in the first information is the same as the identity of the candidate cell in the second information, and the value information in the first information is different from the value information in the second information, determining that current sending of the preamble to the candidate cell is an initial transmission, and resetting the power ramping counter; or
if the identity of the candidate cell in the first information is the same as the identity of the candidate cell in the second information, and the value information in the first information is the same as the value information in the second information, determining that current sending of the preamble to the candidate cell is a retransmission, and skipping resetting the power ramping counter.

16. The method according to claim 11, wherein the first information further comprises an identity of a candidate cell and carrier information of the candidate cell; and
determining, based on the first information and the second information, whether to reset the power ramping counter comprises:

if the identity of the candidate cell in the first information is the same as an identity of a candidate cell in the second information, and the carrier information of the candidate cell in the first information is different from carrier information of the candidate cell in the second information, determining that current sending of the preamble to the candidate cell is an initial transmission, and resetting the power ramping counter; or
if the identity of the candidate cell in the first information is the same as an identity of a candidate cell in the second information, and the carrier information of the candidate cell in the first information is the same as carrier information of the candidate cell in the second information, determining that current sending of the preamble to the candidate cell is a retransmission, and skipping resetting the power ramping counter.

17. The method according to claim 11, wherein the first information further comprises value information, an identity of a candidate cell, and carrier information of the candidate cell; and
determining, based on the first information and the second information, whether to reset the power ramping counter comprises:

if the carrier information of the candidate cell in the first information is the same as carrier information of a candidate cell in the second information, the identity of the candidate cell in the first information is the same as an identity of the candidate cell in the second information, and the value information in the first information is the same as value information in the second information, determining that current sending of the preamble to the candidate cell is an initial transmission, and resetting the power ramping counter; or

if the carrier information of the candidate cell in the first information is the same as carrier information of a candidate cell in the second information, the identity of the candidate cell in the first information is the same as an identity of the candidate cell in the second information, and the value information in the first information is different from value information in the second information, determining that current sending of the preamble to the candidate cell is a retransmission, and skipping resetting the power ramping counter.

18. The method according to any one of claims 12 to 17, wherein skipping resetting the power ramping counter is incrementing or maintaining the power ramping counter.

19. A communication method, comprising:

configuring a first-type preconfigured uplink grant resource and a second-type preconfigured uplink grant resource for a terminal device;
receiving, by the terminal device, a handover command, wherein the handover command comprises a beam direction indication;
selecting, by the terminal device, the second-type preconfigured uplink grant resource associated with the beam direction indication to send an uplink message, to perform a cell handover; and
releasing, by the terminal device, the second-type preconfigured uplink grant resource after completing the cell handover.

20. The method according to claim 19, wherein the first-type preconfigured uplink grant resource and the second-type preconfigured uplink grant resource comprise a plurality of periodic uplink grant resources; and
different uplink grant resources of the plurality of periodic uplink grant resources comprised in the second-type preconfigured uplink grant resource can be associated with different beam directions.

21. A communication apparatus, comprising:

a receiving unit, configured to receive first indication information, wherein the first indication information indicates a terminal device to send a preamble to a first candidate cell, and the first indication information comprises first information; and
a determining unit, configured to determine, based on the first information and second information, whether to reset a power ramping counter, wherein the second information is comprised in second indication information, and the second indication information is indication information that indicates the terminal device to send a preamble to the second candidate cell and that is sent before the first indication information.

22. The apparatus according to claim 21, wherein when determining, based on the first information and the second information, whether to reset the power ramping counter, the determining unit is specifically configured to:

if the first information is different from the second information, determine that current sending of the preamble to the candidate cell is an initial transmission, and reset the power ramping counter; or
if the first information is the same as the second information, determine that current sending of the preamble to the candidate cell is a retransmission, and not reset the power ramping counter.

23. The apparatus according to claim 22, wherein the first information and the second information comprise value information or an identity of a candidate cell.

24. The apparatus according to claim 23, wherein the first information and the second information further comprise beam indication information, and when determining that the current sending of the preamble to the candidate cell is the retransmission, and not resetting the power ramping counter, the determining unit is specifically configured to:
if the beam indication information in the first information is the same as the beam indication information in the second information, increment the power ramping counter.

25. The apparatus according to claim 21, wherein the first information and the second information comprise an identity of a candidate cell and value information; and
when determining, based on the first information and the second information, whether to reset the power ramping counter, the determining unit is specifically configured to:

if the identity of the candidate cell in the first information is the same as the identity of the candidate cell in the second information, and the value information in the first information is different from the value information in the second information, determine that current sending of the preamble to the candidate cell is an initial transmission, and reset the power ramping counter; or
if the identity of the candidate cell in the first information is the same as the identity of the candidate cell in the second information, and the value information in the first information is the same as the value information in the second information, determine that current sending of the preamble to the candidate cell is a retransmission, and not reset the power ramping counter.

26. The apparatus according to claim 21, wherein the first information further comprises an identity of a candidate cell and carrier information of the candidate cell; and
when determining, based on the first information and the second information, whether to reset the power ramping counter, the determining unit is specifically configured to:

if the identity of the candidate cell in the first information is the same as an identity of a candidate cell in the second information, and the carrier information of the candidate cell in the first information is different from carrier information of the candidate cell in the second information, determine that current sending of the preamble to the candidate cell is an initial transmission, and reset the power ramping counter; or
if the identity of the candidate cell in the first information is the same as an identity of a candidate cell in the second information, and the carrier information of the candidate cell in the first information is the same as carrier information of the candidate cell in the second information, determine that current sending of the preamble to the candidate cell is a retransmission, and not reset the power ramping counter.

27. The apparatus according to claim 21, wherein the first information further comprises value information, an identity of a candidate cell, and carrier information of the candidate cell; and
when determining, based on the first information and the second information, whether to reset the power ramping counter, the determining unit is specifically configured to:

if the identity of the candidate cell in the first information is the same as an identity of a candidate cell in the second information, the carrier information of the candidate cell in the first information is the same as carrier information of the candidate cell in the second information, and the value information in the first information is different from value information in the second information, determine that current sending of the preamble to the candidate cell is an initial transmission, and reset the power ramping counter; or
if the identity of the candidate cell in the first information is the same as an identity of a candidate cell in the second information, the carrier information of the candidate cell in the first information is the same as carrier information of the candidate cell in the second information, the carrier information of the candidate cell in the first information is the same as carrier information of the candidate cell in the second information, and the value information in the first information is the same as value information in the second information, determine that current sending of the preamble to the candidate cell is a retransmission, and not reset the power ramping counter.

28. The method according to any one of claims 22 to 27, wherein skipping resetting the power ramping counter is incrementing or maintaining the power ramping counter.

29. A communication apparatus, comprising:

a starting unit, configured to receive first indication information, and start or restart a timer, wherein the first indication information indicates a terminal device to send a preamble to a first candidate cell; and
a determining unit, configured to determine, based on the timer, whether to reset a power ramping counter.

30. The apparatus according to claim 29, wherein when determining, based on the timer, whether to reset the power ramping counter, the determining unit is specifically configured to:
if the timer expires, determine to reset the power ramping counter.

31. The apparatus according to claim 29, wherein the first indication information comprises first information; and

when determining, based on the timer, whether to reset the power ramping counter, the determining unit is specifically configured to:

receive third indication information during running of the timer, wherein the third indication information comprises second information, and the third indication information indicates the terminal device to send a preamble to the second candidate cell; and
determine, based on the first information and the second information, whether to reset the power ramping counter.

32. The apparatus according to claim 31, wherein when determining, based on the first information and the second information, whether to reset the power ramping counter, the determining unit is specifically configured to:

if the first information is different from the second information, determine that current sending of the preamble to the candidate cell is an initial transmission, and reset the power ramping counter; or
if the first information is the same as the second information, determine that current sending of the preamble to the candidate cell is a retransmission, and not reset the power ramping counter.

33. The apparatus according to claim 32, wherein the first information and the second information comprise value information or an identity of a candidate cell.

34. The apparatus according to claim 33, wherein the first information and the second information further comprise beam indication information, and when determining that the current sending of the preamble to the candidate cell is the retransmission, and not resetting the power ramping counter, the determining unit is specifically configured to:
if the beam indication information in the first information is the same as the beam indication information in the second information, increment the power ramping counter.

35. The apparatus according to claim 31, wherein the first information and the second information comprise an identity of a candidate cell and value information; and
when determining, based on the first information and the second information, whether to reset the power ramping counter, the determining unit is specifically configured to:

if the identity of the candidate cell in the first information is the same as the identity of the candidate cell in the second information, and the value information in the first information is different from the value information in the second information, determine that current sending of the preamble to the candidate cell is an initial transmission, and reset the power ramping counter; or
if the identity of the candidate cell in the first information is the same as the identity of the candidate cell in the second information, and the value information in the first information is the same as the value information in the second information, determine that current sending of the preamble to the candidate cell is a retransmission, and not reset the power ramping counter.

36. The apparatus according to claim 31, wherein the first information further comprises an identity of a candidate cell and carrier information of the candidate cell; and
when determining, based on the first information and the second information, whether to reset the power ramping counter, the determining unit is specifically configured to:

if the identity of the candidate cell in the first information is the same as an identity of a candidate cell in the second information, and the carrier information of the candidate cell in the first information is different from carrier information of the candidate cell in the second information, determine that current sending of the preamble to the candidate cell is an initial transmission, and reset the power ramping counter; or
if the identity of the candidate cell in the first information is the same as an identity of a candidate cell in the second information, and the carrier information of the candidate cell in the first information is the same as carrier information of the candidate cell in the second information, determine that current sending of the preamble to the candidate cell is a retransmission, and not reset the power ramping counter.

37. The apparatus according to claim 31, wherein the first information further comprises value information, an identity of a candidate cell, and carrier information of the candidate cell; and
when determining, based on the first information and the second information, whether to reset the power ramping counter, the determining unit is specifically configured to:

if the carrier information of the candidate cell in the first information is the same as carrier information of a candidate cell in the second information, the identity of the candidate cell in the first information is the same as an identity of the candidate cell in the second information, and the value information in the first information is the same as value information in the second information, determine that current sending of the preamble to the candidate cell is an initial transmission, and reset the power ramping counter; or

if the carrier information of the candidate cell in the first information is the same as carrier information of a candidate cell in the second information, the identity of the candidate cell in the first information is the same as an identity of the candidate cell in the second information, and the value information in the first information is different from value information in the second information, determine that current sending of the preamble to the candidate cell is a retransmission, and not reset the power ramping counter.

38. The apparatus according to any one of claims 32 to 37, wherein not resetting the power ramping counter is incrementing or maintaining the power ramping counter.

39. A communication apparatus, wherein a terminal device is configured with a first-type preconfigured uplink grant resource and a second-type preconfigured uplink grant resource, and the communication apparatus comprises:

a transceiver unit, configured to receive a handover command, wherein the handover command comprises a beam direction indication; and

a processing unit, configured to select the second-type preconfigured uplink grant resource associated with the beam direction indication to send an uplink message, to perform a cell handover, wherein

the processing unit is further configured to release the second-type preconfigured uplink grant resource after completing the cell handover.

40. The apparatus according to claim 39, wherein the first-type preconfigured uplink grant resource and the second-type preconfigured uplink grant resource comprise a plurality of periodic uplink grant resources; and

different uplink grant resources of the plurality of periodic uplink grant resources comprised in the second-type preconfigured uplink grant resource can be associated with different beam directions.

41. A communication apparatus, wherein the communication apparatus comprises a processor and a storage medium, the storage medium stores instructions, and when the instructions are run by the processor, the method according to any one of claims 1 to 8 is implemented, or the method according to any one of claims 9 to 18 is implemented, or the method according to either of claims 19 and 20 is implemented.

42. A computer-readable storage medium, wherein the computer-readable storage medium comprises instructions, and when the instructions are run by a processor, the method according to any one of claims 1 to 8 is implemented, or the method according to any one of claims 9 to 18 is implemented, or the method according to either of claims 19 and 20 is implemented.

43. A computer program product, wherein the computer program product comprises instructions, and when the instructions are run by a processor, the method according to any one of claims 1 to 8 is implemented, or the method according to any one of claims 9 to 18 is implemented, or the method according to either of claims 19 and 20 is implemented.

44. A communication system, comprising a terminal device and a network device, wherein the terminal device is configured to implement the method according to any one of claims 1 to 8 or the method according to either of claims 19 and 20, and the network device is configured to implement the method according to any one of claims 9 to 18.

FIG. 1

FIG. 2

FIG. 3

FIG. 4

```
┌──────────┐   ┌──────────┐   ┌──────────┐   ┌──────────┐
│ Terminal │   │Source DU │   │Target DU │   │    CU    │
│ device   │   │          │   │          │   │          │
└────┬─────┘   └────┬─────┘   └────┬─────┘   └────┬─────┘
     │              │              │              │
     │ 1: Configuration of a       │              │
     │◄──────── candidate cell ────┼──────────────┤
     │              │              │              │
     │ 2: Measurement              │              │
     │   reporting                 │              │
     ├─────────────►│              │              │
     │              │              │              │
     │ 3: First indication         │              │
     │   information               │              │
     │◄─────────────┤              │              │
     │              │              │              │
     │       4: Preamble           │              │
     ├──────────────┼─────────────►│              │
     │              │    5: TA     │              │
     │ 6: Handover  │◄─────────────┤              │
     │ command (TA) │              │              │
     │◄─────────────┤              │              │
     │              │              │              │
     │  7: Perform an LTM switch to a              │
     │         target cell         │              │
     ├──────────────┼─────────────►│              │
     │              │              │              │
```

FIG. 5

```
┌──────────────────┐                    ┌──────────────────┐
│ Access network   │                    │ Terminal device  │
│    device        │                    │                  │
└────────┬─────────┘                    └────────┬─────────┘
         │                                       │
         │ S601: First indication information,   │
         │ where the first indication            │
         │ information indicates the             │
         │ terminal device to send a preamble to │
         │ a first candidate cell, and the first │
         │ indication information includes first │
         │ information                           │
         ├──────────────────────────────────────►│
         │                                       │
         │              ┌────────────────────────┴────────┐
         │              │ S602: Determine, based on the   │
         │              │ first information and second    │
         │              │ information, whether to reset a │
         │              │ power ramping counter, where    │
         │              │ the second information is       │
         │              │ included in second indication   │
         │              │ information, and the second     │
         │              │ indication information is       │
         │              │ indication information that     │
         │              │ indicates the terminal device to│
         │              │ transmit a preamble to a second │
         │              │ candidate cell and that is sent │
         │              │ before the first indication     │
         │              │ information                     │
         │              └────────────────────────┬────────┘
         │                                       │
```

FIG. 6

EP 4 746 491 A1

Access
network
device

| PDCCH order (flag = 0, cell = 1) | Preamble failure | PDCCH order (flag = 0, cell = 1) | Preamble failure | ... | PDCCH order (flag = 0, cell = 1) | Preamble success | PDCCH order (flag = 1, cell = 1) | PDCCH order (flag = 1, cell = 1) |

Terminal
device

Power ramping
counter = 1

Power ramping
counter = 2

Power ramping
counter = M

✕

Power ramping
counter = 1

FIG. 6A

```
┌─────────────────┐                    ┌─────────────────┐
│ Access network  │                    │ Terminal device │
│     device      │                    │                 │
└─────────────────┘                    └─────────────────┘
        │                                      │
        │  S701: First indication information, │
        │  where the first indication          │
        │  information indicates the terminal   │
        │  device to send a preamble to a first │
        │  candidate cell                       │
        │─────────────────────────────────────▶│
        │                                      │
        │            ┌──────────────────────────────────────┐
        │            │ S702: Receive the first indication    │
        │            │ information, and start or restart a   │
        │            │ timer                                 │
        │            └──────────────────────────────────────┘
        │                                      │
        │            ┌──────────────────────────────────────┐
        │            │ S703: Determine, based on the timer,  │
        │            │ whether to reset a power ramping      │
        │            │ counter                               │
        │            └──────────────────────────────────────┘
        │                                      │
```

FIG. 7

FIG. 7A

EP 4 746 491 A1

| Access network device | | Terminal device |
|---|---|---|

S801: Fourth indication information and fifth indication information, where the fourth indication information indicates service data, and the fifth indication information indicates the terminal device to perform a cell handover

S802: Complete L2 processing on the fourth indication information and the fifth indication information, and then perform an L2 reset based on the fifth indication information

**FIG. 8**

Communication apparatus 900

Receiving unit — 901

Determining unit — 902

**FIG. 9**

Communication apparatus 1000

Starting unit — 1001

Determining unit — 1002

**FIG. 10**

Communication apparatus 1100

Receiving unit — 1101

Processing unit — 1102

**FIG. 11**

110

| Interface | 111 |

Processor — 112

Program — 114

Memory — 113

Program — 115

## FIG. 12

Antenna

1301

Control circuit

1300

Memory    Processor

1302

Input/Output apparatus

## FIG. 13

## INTERNATIONAL SEARCH REPORT

| International application No. |
| --- |
| **PCT/CN2024/110486** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, WPABSC, DPWI, 3GPP: 复位, 高, 功率, 归零, 计数器, 前导, 升, 重置, 计数器, 定时器, 资源, 切换, 启动, 上行, 下行, 授权, 释放, 去激活, reset, power, zero, counter, up, reset, resource, handover, start, uplink, UL, downlink, DL, grant, release, deactivation, preamble

**C. DOCUMENTS CONSIDERED TO BE RELEVANT**

| Category* | Citation of document, with indication, where appropriate, of the relevant passages | Relevant to claim No. |
| --- | --- | --- |
| X | US 2020351801 A1 (JEON, Hyoungsuk et al.) 05 November 2020 (2020-11-05) description, paragraphs 202-641 | 9-20, 29-44 |
| A | US 2020351801 A1 (JEON, Hyoungsuk et al.) 05 November 2020 (2020-11-05) description, paragraphs 202-641 | 1-8, 21-28 |
| A | CN 116250186 A (INTERDIGITAL PATENT HOLDINGS, INC.) 09 June 2023 (2023-06-09) entire document | 1-44 |
| A | US 2020186308 A1 (HUAWEI TECHNOLOGIES CO., LTD.) 11 June 2020 (2020-06-11) entire document | 1-44 |
| A | US 2022304100 A1 (FG INNOVATION CO., LTD.) 22 September 2022 (2022-09-22) entire document | 1-44 |
| A | WO 2023134580 A1 (VIVO MOBILE COMMUNICATION CO., LTD.) 20 July 2023 (2023-07-20) entire document | 1-44 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 October 2024** | **04 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/110486**

| Patent document cited in search report | | | Publication date (day/month/year) | Patent family member(s) | | | Publication date (day/month/year) |
|---|---|---|---|---|---|---|---|
| US | 2020351801 | A1 | 05 November 2020 | None | | | |
| CN | 116250186 | A | 09 June 2023 | JP | 2023536723 | A | 29 August 2023 |
| | | | | WO | 2022031958 | A1 | 10 February 2022 |
| | | | | EP | 4193484 | A1 | 14 June 2023 |
| | | | | US | 2023300645 | A1 | 21 September 2023 |
| | | | | BR | 112023002114 | A2 | 18 April 2023 |
| US | 2020186308 | A1 | 11 June 2020 | CA | 3072683 | A1 | 14 February 2019 |
| | | | | EP | 3661296 | A1 | 03 June 2020 |
| | | | | BR | 112020002879 | A2 | 28 July 2020 |
| | | | | WO | 2019029423 | A1 | 14 February 2019 |
| | | | | MX | 2020001639 | A | 13 July 2020 |
| | | | | JP | 2020529813 | A | 08 October 2020 |
| | | | | CN | 110800357 | A | 14 February 2020 |
| | | | | CN | 109392156 | A | 26 February 2019 |
| US | 2022304100 | A1 | 22 September 2022 | CN | 115119341 | A | 27 September 2022 |
| WO | 2023134580 | A1 | 20 July 2023 | CN | 116471702 | A | 21 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311011272